# EUROPEAN PATENT APPLICATION

(11) **EP 2 952 540 A1**
(43) Date of publication of application: **09.12.2015**
(21) Application number: 14745520.8
(22) Date of filing: 30.01.2014
(51) Int. Cl.: C08L 1/00, C08L 1/14, C08L 67/02, C08L 67/04, C08L 101/16

(54) **CELLULOSE-TYPE RESIN COMPOSITION, MOLDING MATERIAL, AND MOLDED ARTICLE**

(30) Priority: 30.01.2013 JP 2013016255; 18.10.2013 JP 2013217702
(71) Applicant: NEC Corporation, Tokyo 108-8001 (JP)
(72) Inventor: SOYAMA, Makoto, Tokyo 108-8001 (JP); KIUCHI, Yukihiro, Tokyo 108-8001 (JP); IJI, Masatoshi, Tokyo 108-8001 (JP); TANAKA, Shukichi, Tokyo 108-8001 (JP); TOYAMA, Kiyohiko, Tokyo 108-8001 (JP)
(74) Representative: Betten & Resch
(86) International application number: PCT/JP2014/052070
(87) International publication number: WO 2014/119657

(57) **Abstract**

A composition containing a cellulose resin (X) obtained by binding an organic group to cellulose or a derivative thereof and a linear aliphatic polyester (Y), which is at least one of the following linear aliphatic polyesters (Y1) and (Y2) or a crosslinked product thereof:
(Y1) a linear aliphatic polyester containing at least one of repeat units represented by the following formula (I) and formula (II)

-(CO-R¹-COO-R²-O)- formula (I)

where R¹ represents a bivalent aliphatic group having 1 to 12 carbon atoms and R² represents a bivalent aliphatic group having 2 to 12 carbon atoms.

-(CO-R³-O)- formula (II)

where R³ represents a bivalent aliphatic group having 2 to 10 carbon atoms.
(Y2) a linear aliphatic polyester comprising a ring-opening polymerization product of a cyclic ester.

## Description

### Technical Field

The present invention relates to a cellulose resin composition, a molding material and a molded article.

### Background Art

Bioplastics derived from plants as a raw material can contribute to environmental protection measures. Because of this, bioplastics have been used in a wide variety of fields. Of the bioplastics, as bioplastics derived from non-edible parts as a raw material, various types of bioplastics have been already developed from cellulose, which is a main component of woods and plants, and are commercially available. More specifically, for example, cellulose derivatives such as a cellulose ester including cellulose acetate, cellulose acetate propionate, cellulose acetate butyrate and cellulose acetate phthalate have been used in various fields.

Cellulose is a polymer obtained by polymerization of β-glucose, and a rigid and fragile as well as non-thermoplastic polymer due to high crystallinity. In addition, since cellulose contains a large number of hydroxy groups, its water absorbability is high and water resistance is low. Then, to improve these properties of cellulose, various studies have been made.

For example, Patent Literature 1 discloses a biodegradable graft polymer having thermoplasticity obtained by grafting ε-caprolactone to cellulose acetate having a hydroxy group, through ring-opening polymerization.

In the meantime, materials using non-edible components other than cellulose have been developed. For example, cardanol, which is derived from cashew nutshell, which is stably produced and excellent in functionality due to its characteristic molecular structure, finds various uses. As an example of a material using cardanol, Patent Literature 2 discloses, a friction material for brake, which is formed of a fiber base-material composed of an aramid pulp and a cellulose fiber, a filler composed of calcium carbonate and cashew dust, and a binder composed of a phenol resin; and Patent Literature 3 discloses a friction material, which is formed of a base material composed of an aramid fiber and a cellulose fiber, a filler composed of graphite and cashew dust, and an organic/inorganic composite binder and sates that the friction material is applied, for example, to clutch facing in power transmission systems of automobiles.

Patent Literature 4 discloses a molding material containing a cellulose derivative obtained by introducing both an ether structure and an ester structure into cellulose, a rubber particle and an aliphatic polyester elastomer, for the purpose of improving impact resistance and rigidity of a molding material using cellulose.

Patent Literature 5 discloses a resin composition containing a biodegradable aliphatic polyester resin, a biodegradable polysaccharide and a hydrolysis-suppressing agent, for the purpose of realizing excellent mechanical strength and heat resistance, and states that, in Example 1, a polylactic acid having a branched structure is used as the aliphatic polyester and cellulose propionate is used as the polysaccharide.

Non Patent Literature 1 states that the water resistance of paper can be improved by soaking a paper sheet in cardanol and allowing cardanol to bind to cellulose constituting the paper sheet through a grafting reaction; and that, in the grafting reaction, a terminal double bond of cardanol is bound to a hydroxy group of cellulose in the presence of boron trifluoride diethyl ether (BF₃-OEt₂).

### Citation List

### Patent Literatures

Patent Literature 1: JP11-255801A
Patent Literature 2: JP10-8035A
Patent Literature 3: JP2001-32869A
Patent Literature 4: JP2011-148975A
Patent Literature 5: JP2005-162870A

### Non Patent Literature

Non Patent Literature 1: George John et al. Polymer Bulletin, 22, p.89-94 (1989)

### Summary of Invention

### Technical Problem

Cellulose based bioplastics are inferior to petroleum plastics in strength, heat resistance, water resistance, thermoplasticity and impact resistance. These properties must be improved in order to apply cellulose based bioplastics to durable articles, particularly, such as outer packages for electronic devices. However, if a plasticizer obtained from petroleum feedstock is added in order to improve thermoplasticity, plant availability (plant origin) of the cellulose based bioplastics decreases. In addition to this problem, heat resistance and strength (in particular, rigidity) as well as homogeneity are lowered. Further, the bleed-out of a plasticizer (plasticizer exudes to the surface of a molded article) occurs. If a general softening component is added in order to improve impact resistance, the bleed-out of the softening component occurs in molding the cellulose based bioplastics, affecting moldability in some cases.

In the circumstances, an object of the present invention is to provide a cellulose resin composition overcoming any of the above problems and particularly to provide a cellulose resin composition improved in impact resistance.

### Solution to problem

A cellulose resin composition according to an exemplary embodiment contains a cellulose resin (X) obtained by binding an organic group to cellulose or a derivative thereof, and a linear aliphatic polyester (Y), which is at least one of the following linear aliphatic polyesters (Y1) and (Y2) or a crosslinked product thereof.

(Y1) a linear aliphatic polyester containing at least one of repeat units represented by the following formula (I) and formula (II)

   -(CO-R¹-COO-R²-O)- formula (I)

   where R¹ represents a bivalent aliphatic group having 1 to 12 carbon atoms and R² represents a bivalent aliphatic group having 2 to 12 carbon atoms.

   -(CO-R³-O)- formula (II)

   where R³ represents a bivalent aliphatic group having 2 to 10 carbon atoms.
(Y2) a linear aliphatic polyester comprising a ring-opening polymerization product of a cyclic ester.

A molding material according to another exemplary embodiment contains the cellulose resin composition.

A molded article according to another exemplary embodiment is obtained by molding the molding material.

### Advantageous Effects of Invention

According to an exemplary embodiment, it is possible to provide a cellulose resin composition overcoming any of the above problems and particularly to provide a cellulose resin composition improved in impact resistance.

### Description of Embodiments

The present inventors found that if a cellulose resin (X) and a linear aliphatic polyester or a crosslinked product thereof (Y) are contained in a cellulose resin composition, as described above, the dispersibility of the linear aliphatic polyester or a crosslinked product thereof in the cellulose resin can be improved, thereby improving impact resistance.

In the exemplary embodiment, the cellulose resin (X) is obtained by binding a carboxylic acid, an alcohol or a phenol to cellulose or a derivative thereof and thus has an organic group containing an oxygen atom, such as an acyl group, an ether group or an ester group in its structure. In other words, the organic group is bound to cellulose or a derivative thereof via an oxygen atom-containing bond such as an ester bond or an ether bond. The organic group may be bound to cellulose or a derivative thereof via a urethane bond as the oxygen atom-containing bond. The organic group can be bound to cellulose or a derivative thereof by way of a hydroxy group of a glucose ring thereof. More specifically, to the carbon atom of a glucose ring to which a hydroxy group has been bound, an organic group can be bound via an oxygen atom-containing bond or an organic linking group having an oxygen atom-containing bond. The organic group to be bound to the oxygen atom-containing bond or the organic linking group preferably has carbon atoms within the range of 1 to 32, and examples include a hydrocarbon group having 1 to 32 carbon atoms.

As mentioned above, if a cellulose resin (X) having an oxygen atom-containing organic group as mentioned above such as an acyl group, an ether group or an ester group and a linear aliphatic polyester having an ester group or a crosslinked product thereof (Y) as mentioned above are used, it is considered that the oxygen atom-containing organic group such as an acyl group, an ether group or an ester group contained in the former component and the ester group contained in the latter component synergetically work to improve dispersibility.

In addition, owing to the presence of the cellulose resin (X) and the linear aliphatic polyester or a crosslinked product thereof (Y), not only impact resistance and transparency but also water resistance and plasticity of the cellulose resin composition can be improved. Because of this, for example, the amount of plasticizer to be added to the cellulose resin composition can be reduced or a plasticizer may not be added. As a result, reduction in heat resistance and strength (in particular, rigidity) of a cellulose resin composition caused by addition of a plasticizer is suppressed; at the same time, bleed-out of an additive such as a plasticizer to a molded article can be suppressed.

Now, the exemplary embodiment will be described below.

First, the constitution of the cellulose resin composition according to the exemplary embodiment will be described.

The cellulose resin composition according to the exemplary embodiment, as described above, contains the following cellulose resin (X) and a linear aliphatic polyester (Y), which is at least one of the following linear aliphatic polyesters (Y1) and (Y2) or a crosslinked product thereof.

(X) a cellulose resin obtained by binding at least one selected from the group consisting of a carboxylic acid, an alcohol and a phenol each having 1 to 32 carbon atoms, and derivatives of thereof, to cellulose or a derivative thereof.
(Y1) a linear aliphatic polyester containing at least one of repeat units represented by the following formula (I) and formula (II)

   -(CO-R¹-COO-R²-O)- formula (I)

   where R¹ represents a bivalent aliphatic group having 1 to 12 carbon atoms and R² represents a bivalent aliphatic group having 2 to 12 carbon atoms.

   -(CO-R³-O)- formula (II)

   where R³ represents a bivalent aliphatic group having 2 to 10 carbon atoms.
(Y2) a linear aliphatic polyester comprising a ring-opening polymerization product of a cyclic ester.

In the exemplary embodiment, examples of the cellulose resin (X) include a cellulose resin having at least one of an acyl group and an ether group.

As the cellulose resin (X), a resin obtained by binding at least one of the following compounds (X1), (X2) and (X3) to cellulose or a derivative thereof can be used.

(X1) a carboxylic acid having 1 to 32 carbon atoms or a derivative thereof,
(X2) an alcohol having 1 to 32 carbon atoms or a derivative thereof, and
(X3) a phenol having 1 to 32 carbon atoms or a derivative thereof.

The compounds (X1), (X2) and (X3) each may be used singly or as a mixture of two or more. Of them, a cellulose resin (X) obtained by binding a compound (X1) singly is preferable.

Hereinafter, unless otherwise specified, the term "cellulose" may be interchangeably used with a "cellulose derivative."

The cellulose resin (X) may be one obtained by binding, for example, at least one of compounds (X1), (X2) and (X3), to cellulose; and may be one obtained by binding at least one of compounds (X1), (X2) and (X3) to a cellulose derivative. Both cases may be included. The cellulose resin (X) may be one obtained by binding two or more of compounds (X1), by binding two or more of compounds (X2) or by binding two or more of compounds (X3). Of these, a cellulose resin (X) obtained by binding one or two or more of compounds (X1) to cellulose or a derivative thereof is particularly preferable.

Of the cellulose resins (X) as mentioned above, the resin obtained by binding a compound (X1: a carboxylic acid (R-CO-OH) having 1 to 32 carbon atoms or a derivative thereof) to cellulose or a derivative thereof, can be also expressed as, for example, a resin obtained by substituting a hydrogen atom of a hydroxy group of cellulose or a derivative thereof with the following organic group (X1'):
(X1') an acyl group (R-CO-) having 1 to 32 carbon atoms.

In the resin obtained by binding a compound (X1) to cellulose or a derivative thereof, for example, an acyl group (R-CO-) having 1 to 32 carbon atoms is added to the cellulose or a derivative thereof through a reaction between a hydroxy group of the cellulose or a substituent thereof (a group substituted for the hydroxy group) and the carboxy group (-COOH) of a carboxylic acid having 1 to 32 carbon atoms or a substituent thereof (a group substituted for the carboxy group). In other words, for example, the hydrogen atom H of a hydroxy group (-OH) of cellulose is substituted with an acyl group (R-CO-), which is equivalent to the case where a group (R-CO-O-) obtained by removing a hydrogen atom from the carboxylic acid, is bound (added) to a carbon (the carbon to which the hydroxy group has been bound) of the cellulose. The reaction between a hydroxy group of the cellulose or a substituent thereof and the carboxy group or a substituent thereof is, for example, a dehydration reaction to form an ester bond. The OH of the carboxy group and hydroxy group, may be substituted with a halogen atom (X) such as Cl, F, Br and I. In this case, for example, a bond is formed between -COX and -OH or between -COOH and -X by removing HX.

The carboxylic acid or a derivative thereof (X1) include, for example, a compound obtained by introducing a carboxy group into cardanol (or hydrogenated cardanol) via the hydroxy group thereof; and an acid halide obtained by acid-halogenation of the carboxy group thereof.

Of the cellulose resins (X), the resin obtained by binding a compound (X2: an alcohol (ROH) having 1 to 32 carbon atoms or a derivative thereof) to cellulose or a derivative thereof, can be expressed as, in other words, for example, a resin obtained by adding the following organic group (X2'):
(X2') an ether group (RO-) having 1 to 32 carbon atoms.

In the resin obtained by binding the compound (X2) to cellulose or a derivative thereof, for example, an ether group (RO-) having 1 to 32 carbon atoms is added to the cellulose through a reaction between a hydroxy group of the cellulose or a substituent thereof and the hydroxy group (-OH) of an alcohol having 1 to 32 carbon atoms or a substituent thereof. In other words, for example, the hydrogen atom H of the hydroxy group (-OH) of cellulose is substituted with a hydrocarbon group (R-) having 1 to 32 carbon atoms, which is equivalent to the case where an ether group (RO-) is bound (added) to a carbon (the carbon to which the hydroxy group has been bound) of the cellulose. The reaction between a hydroxy group of the cellulose or a substituent thereof and the hydroxy group of the alcohol or a substituent thereof is, for example, a dehydration reaction to form an ether bond. The hydroxy group may be substituted with a halogen atom (X) such as Cl, F, Br and I. In this case, for example, a bond is formed between -X and -OH by removing HX.

Of the cellulose resins (X), a resin obtained by binding a compound (X3: a phenol (ROH) having 1 to 32 carbon atoms or a derivative thereof) to cellulose or a derivative thereof, can be expressed as, for example, a resin obtained by adding the following organic group (X3'):
(X3') an ether group (RO-) having 1 to 32 carbon atoms.

In the resin obtained by binding the compound (X3) to cellulose or a derivative thereof, for example, an ether group (RO-) having 1 to 32 carbon atoms is added to the cellulose through a reaction between a hydroxy group of the cellulose or a substituent thereof and the hydroxy group (-OH) of a phenol having 1 to 32 carbon atoms or a substituent thereof. In other words, for example, the hydrogen atom H of a hydroxy group (-OH) of the cellulose is substituted with a hydrocarbon group (R-) having 1 to 32 carbon atoms, which is equivalent to the case where an ether group (RO-) is bound (added) to a carbon (the carbon to which the hydroxy group has been bound) of the cellulose. The reaction between the hydroxy group of the cellulose or a substituent thereof and hydroxy group of a phenol or a substituent thereof is, for example, a dehydration reaction to form an ether bond. At this time, a dehydration catalyst such as sulfuric acid, toluene sulfonic acid and hydrogen chloride can be added. The hydroxy group may be substituted with a halogen atom (X) such as Cl, F, Br and I. In this case, for example, a bond is formed between -X and -OH by removing HX.

The reaction between a hydroxy group of cellulose or a substituent thereof and the hydroxy group of a phenol (or alcohol) or a substituent thereof can be performed by use of a polyfunctional compound capable of reacting with the hydroxy group of the cellulose and the hydroxy group of the phenol (or alcohol). As a result, a cellulose carbon atom to which the hydroxy group of cellulose (or a derivative thereof) is bound, and a phenolic carbon atom to which the hydroxy group of the phenol (or a derivative thereof) is bound (or an alcohol carbon atom to which the hydroxy group of the alcohol is bound) are connected via the organic linking group. The organic linking group may contain a binding group (oxygen-containing binding groups such as an ester bond, an ether bond and a urethane bond) to be bound to the cellulose carbon atom and a binding group (oxygen-containing binding groups such as an ether bond, an ester bond and a urethane bond) to be bound to the phenolic carbon atom (or alcohol carbon). The organic linking group may contain a bivalent hydrocarbon group, for example, having 1 to 20 carbon atoms, preferably 1 to 14 carbon atoms and more preferably 1 to 8 carbon atoms between these binding group s.

Examples of the cellulose resin (X) may include an acylated cellulose such as cellulose acetate propionate and cellulose acetate butyrate; and a grafted cellulose obtained by binding a long organic group such as cardanol or a derivative thereof to cellulose or an acylated cellulose.

As the cellulose resin (X), a cellulose resin obtained, for example, by binding cardanol or a derivative thereof (for example, a hydrogenated cardanol, cardanol having a carboxy group introduced therein via a hydroxy group, or an acid halide obtained by acid-halogenation of the carboxy group), which is used as a phenol, alcohol or carboxylic acid or a derivative thereof to cellulose or a derivative thereof, can be used. Examples of the binding include grafting by which cardanol or a derivative thereof is bound to cellulose or a derivative thereof in a grafting manner. Examples of the cellulose resin (X) include a cardanol-grafted cellulose acetate, cardanol-grafted cellulose propionate, cardanol-grafted cellulose acetate propionate and cardanol-grafted cellulose acetate butyrate. In the cardanol moiety of such cellulose resins, all or part of the double bonds (double bonds of an aromatic ring and double bonds of a linear hydrocarbon group) may be hydrogenated.

In the cellulose resin composition according to the exemplary embodiment, for example, the aforementioned resins may be used singly or in combinations of two or more as the cellulose resin (X). The resin component in the cellulose resin composition according to the exemplary embodiment may contain, for example, the cellulose resin (X) alone or may further contain another resin.

In the cellulose resin composition according to the exemplary embodiment, the linear aliphatic polyester or a crosslinked product thereof (Y) may be one of the linear aliphatic polyesters (Y1) and (Y2) or a crosslinked product thereof, or both may be used.

The linear aliphatic polyester (Y1) may contain, for example, a repeat unit represented by the above formula (I) or a repeat unit represented by the above formula (II), or alternatively, may contain both repeat units represented by the above formulas (I) and (II).

In the cellulose resin composition according to the exemplary embodiment, the linear aliphatic polyesters (Y1) may be used singly or in combinations two or more. The linear aliphatic polyester (Y1) is preferably a linear aliphatic polyester formed by condensation of at least one selected from, for example, an aliphatic dicarboxylic acid, an acid anhydride thereof and a diester product thereof, and an aliphatic diol.

In the cellulose resin composition according to the exemplary embodiment, the linear aliphatic polyesters (Y2) may be used singly or in combinations of two or more.

Examples of the linear aliphatic polyester or a crosslinked product thereof (Y) include polybutylene succinate, polybutylene succinate adipate, polycaprolactone or a crosslinked product of each of these.

The polycaprolactone is not particularly limited; however, examples include a ring-opening polymerization product of ε-caprolactone, which has a repeat unit represented by [-(CH₂)₅CO-O-] and a structure formula represented by [-(CH₂)₅CO-O-]ₙ (n is a positive integer).

The linear aliphatic polyester (Y) has a number average molecular weight which can be set to fall within the range of, for example, 10000 to 200000. The range is preferably 10000 to 100000, more preferably 20000 to 80000 and further preferably 20000 to 50000. The range of the weight average molecular weight thereof is, for example, 20000 to 200000, preferably 30000 to 100000 and more preferably 30000 to 80000. The linear aliphatic polyester (Y) preferably satisfies either one of, for example, the number average molecular weight and the weight average molecular weight and more preferably both of them. The number average molecular weight and the weight average molecular weight each can be measured, for example, by gel permeation chromatography, and more specifically, in accordance with the method described in Examples.

In the cellulose resin composition of the exemplary embodiment, as the crosslinked product of linear aliphatic polyester (Y), a crosslinked product, which is polymerized by crosslinking a linear aliphatic polyester with a polyfunctional compound (crosslinking agent) capable of reacting with a linear aliphatic polyester, such as a carbodiimide compound, an epoxy compound, an isocyanate compound, an oxazoline compound, an oxazine compound and an aziridine compound, can be used. Of them, a carbodiimide compound, such as an aliphatic polycarbodiimide and an aromatic polycarbodiimide, is preferably used since it is excellent in stability and reactivity with a carboxy group terminal.

The amount of such a crosslinking agent to be used (the mass ratio of a crosslinking agent to the total of the crosslinking agent and a linear aliphatic polyester) can be set to fall within the range of 0.1 to 10 % by mass, preferably 0.3 to 5 % by mass and more preferably 0.5 to 3 % by mass.

If a linear aliphatic polyester is crosslinked with a crosslinking agent, the linear aliphatic polyester molecules are more entangled, e.g., the bend-breaking strain and impact strength of the cellulose resin composition according to the exemplary embodiment can be therefore improved.

In the cellulose resin composition according to the exemplary embodiment, the content ratio of a cellulose resin (X) to a linear aliphatic polyester or a crosslinked product thereof (Y), is not particularly limited; however the mass ratio (X:Y) preferably falls within the range of, for example, 95:5 to 30:70, more preferably 90:10 to 30:70 and particularly preferably 90:10 to 40:60. The mass ratio (X:Y) can be set to fall within the range of 90:10 to 50:50 and further within the range of 90:10 to 70:30.

The cellulose resin composition according to the exemplary embodiment may be constituted only of a cellulose resin (X) and a linear aliphatic polyester or a crosslinked product thereof (Y) or may further contain other components such as additives.

It is preferable that the cellulose resin composition according to the exemplary embodiment does not substantially contain, for example, a compatibility accelerator. The phrase "does not substantially contain," not only means "not contain at all" but also means that, for example, a compatibility accelerator is contained in a cellulose resin composition but the proportion thereof is too low to substantially perform its function. The phrase "does not substantially contain" means that the content ratio (% by mass) of the compatibility accelerator in the cellulose resin composition is, for example, preferably 10% or less, more preferably 5% or less, further preferably 4% or less, 3% or less, 2% or less, or 1% or less, particularly preferably a detection limit or less and most preferably 0%.

Compatibility generally means that two polymers are mixed with each other, in other words, dissolve each other. The compatibility accelerator generally means an agent for dissolving two polymers with each other. In the exemplary embodiment, whether the compatibility accelerator is added or not, if added, the type and amount of compatibility accelerator, can be appropriately determined depending upon the types of cellulose resin (X) and linear aliphatic polyester or a crosslinked product thereof (Y). In the present invention, as described above, it is preferable that a compatibility accelerator for dissolving a cellulose resin (X) and a linear aliphatic polyester or a crosslinked product thereof (Y) with each other is not contained. Examples of the compatibility accelerator include a graft copolymer obtained by graft-polymerization of a styrene-acrylonitrile copolymer to an ethylene-glycidyl methacrylate copolymer; a graft copolymer obtained by graft-polymerization of styrene to an ethylene-glycidyl methacrylate copolymer; a graft copolymer obtained by graft-polymerization of styrene to a low-density polypropylene; and a graft copolymer obtained by graft-polymerization of styrene to an ethylene-ethyl acrylate copolymer.

Now, the exemplary embodiment will be more specifically described below. Note that the present invention will be described by way of examples and the present invention is not limited by these examples.

### (1) Cellulose or a derivative thereof

Cellulose is a linear polymer of β-glucose, represented by the following formula (1). Each of glucose units constituting cellulose has three hydroxy groups. A cellulose resin (X) as mentioned above, can be synthesized by binding at least one of compounds (X1), (X2) and (X3) as mentioned above to cellulose or a derivative thereof, for example, via these hydroxy groups. For example, cardanol or a derivative thereof can be bound (grafted) to cellulose or a derivative thereof.

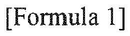

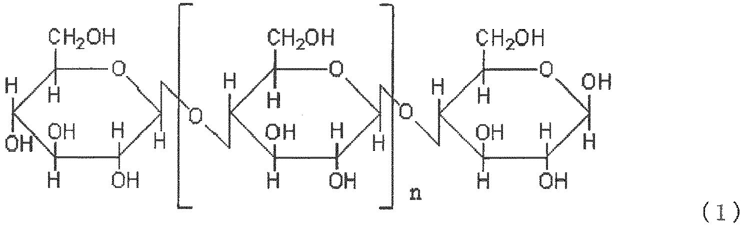

Cellulose is a main component of plants and can be obtained from a plant, for example, by separating other components such as lignin. In the present invention, not only cellulose obtained in this way but also e.g., cotton and pulp having a high cellulose content can be used with or without purification.

The degree of polymerization of cellulose and a derivative thereof, which is not particularly limited, falls within the range of preferably, for example, 50 to 5000 in terms of the degree of glucose polymerization and more preferably 100 to 3000. If the degree of polymerization is set to fall within the range, for example, a cellulose resin, a cellulose resin composition and a molded article obtained from the cellulose resin can obtain sufficient strength and heat resistance. Also, a problem in molding caused by increasing the melt viscosity of a resin can be suppressed.

A cellulose derivative as mentioned above is obtained from a raw material cellulose, for example, by biologically or chemical synthetically introducing a substituent into cellulose. More specifically, such a cellulose derivative may be obtained, for example, by acylating or etherifying all or part of hydroxy groups of cellulose or performing graft to them. Specific examples of the cellulose derivative include organic acid esters such as cellulose acetate, cellulose butyrate and cellulose propionate; inorganic acid esters such as cellulose nitrate, cellulose sulfate and cellulose phosphate; mixed esters such as cellulose acetate propionate, cellulose acetate butyrate, cellulose acetate phthalate and cellulose nitrate acetate; and etherified celluloses such as methyl cellulose, hydroxyethyl cellulose and hydroxypropyl cellulose. Examples of the cellulose derivative include grafted cellulose obtained by binding a polymer such as styrene, (meth)acrylic acid, (meth)acrylate, ε-caprolactone, lactide and glycolide to cellulose.

Of the cellulose derivatives, acylated cellulose obtained by acylating a part of the hydroxy groups of cellulose can be used. As the acylated cellulose, at least one acylated cellulose selected from the group consisting of cellulose acetate, cellulose propionate, cellulose butyrate, cellulose acetate propionate and cellulose acetate butyrate.

In the cellulose derivative, the degree of substitution of hydroxy groups per, for example, glucose unit, is not particularly limited. More specifically, the average number of substituents such as acyl groups introduced through a reaction with hydroxy groups, per glucose unit, in other words, the average number of hydroxy groups converted (degree of hydroxy group substitution) (DSxx) per glucose unit is preferably 1.0 or more and 2.8 or less and more preferably 2.0 or more and 2.8 or less, in view of, for example, water resistance, mechanical characteristics and heat resistance. Furthermore, the average number of remaining hydroxy groups per, for example, glucose unit, in the cellulose derivative, in other words, degree of residual hydroxy groups (DS_{OH}) is preferably 0.9 or less and more preferably 0.7 or less in order to, for example, sufficiently obtain water resistance.

In the exemplary embodiment, cellulose and the cellulose derivatives may be used, for example, singly or in combinations of two or more. The cellulose derivatives may be used, for example, singly or in combinations of two or more.

In the cellulose and the cellulose derivative of the exemplary embodiment, as an analogue of cellulose, for example, a general non-edible polysaccharide such as chitin, chitosan, hemicellulose, glucomannan and curdlan, can be also used.

### (2) Cellulose resin (X)

A cellulose resin (X) as mentioned above is a resin obtained by binding at least one of compounds (X1), (X2) and (X3) to cellulose or a derivative thereof, as mentioned above.

(X1) a carboxylic acid having 1 to 32 carbon atoms or a derivative thereof,
(X2) an alcohol having 1 to 32 carbon atoms or a derivative thereof, and
(X3) a phenol having 1 to 32 carbon atoms or a derivative thereof.

In the cellulose resin (X), for example, a hydroxy group of cellulose or a derivative thereof is reacted with the carboxyl group of the carboxylic acid or the hydroxy group of an alcohol or phenol to form an ester bond or a glycoside bond. Herein, forming an ester bond or a glycoside bond by reacting cellulose or a derivative thereof and the carboxyl group of the carboxylic acid or the hydroxy group of an alcohol or phenol is also referred to as grafting to the cellulose or a derivative thereof.

When the carboxylic acid, alcohol or phenol has at least one of an aromatic group and an alicyclic group, it is effective to graft these to cellulose or a derivative thereof in improving rigidity such as bending strength and heat resistance of, for example, a molded article finally obtained. In contrast, when the carboxylic acid, alcohol or phenol has an aliphatic group, it is effective to graft these to cellulose or a derivative thereof in improving toughness of a molded article finally obtained.

The compounds (X1), (X2) and (X3) have 1 to 32 carbon atoms and preferably 1 to 20 carbon atoms. If the number of carbon atoms falls within the range, for example, steric hindrance is suppressed and the reaction rate (grafting ratio) of the hydroxy group(s) in cellulose or a derivative thereof can be raised.

Examples of the carboxylic acid of a compound (X1) mentioned above include, but are not particularly limited to, an acyclic carboxylic acid and a cyclic carboxylic acid. These may be used singly or in combinations of two or more. Examples of the acyclic carboxylic acid include linear and branched aliphatic carboxylic acids, and particularly an acyclic aliphatic monocarboxylic acid is preferable. Examples of the cyclic carboxylic acid include an alicyclic carboxylic acid and an aromatic carboxylic acid and particularly a cyclic monocarboxylic acid is preferable. In the cyclic monocarboxylic acid, the carboxy group may directly bind to, for example, an alicyclic group or an aromatic ring or a substituent of an alicyclic group or an aromatic ring. Furthermore, as the carboxylic acid, for example, a carboxylic anhydride may be used.

Examples of the carboxylic acid include saturated monocarboxylic acids such as acetic acid, propionic acid, butyric acid, valeric acid, caproic acid, enanthic acid, caprylic acid, pelargonic acid, capric acid, 2-ethyl-hexane carboxylic acid, undecylic acid, lauric acid, tridecylic acid, myristic acid, pentadecylic acid, palmitic acid, heptadecylic acid, stearic acid, nonadecanoic acid, arachidic acid, behenic acid, lignoceric acid, cerotic acid, heptacosanoic acid, montanoic acid, melissic acid and lacceric acid; and unsaturated monocarboxylic acids such as butenoic acid, pentenoic acid, hexenoic acid, octenoic acid, undecylenic acid, oleic acid, sorbic acid, linoleic acid, linolenic acid and arachidonic acid. Examples of the alicyclic carboxylic acid include cyclopentane carboxylic acid, cyclohexane carboxylic acid, cyclooctane carboxylic acid and cyclohexyl acetic acid. Examples of the aromatic carboxylic acid include benzoic acid, toluic acid, phenyl acetic acid, phenyl propionic acid, biphenyl carboxylic acid, biphenyl acetic acid, naphthalene carboxylic acid and tetralin carboxylic acid. Of these carboxylic acids, for example, acetic acid, propionic acid and butyric acid (butyryl acid) are preferable.

The carboxylic acid derivative refers to, for example, a carboxylic acid derivative having a substituent obtained by converting a carboxy group and a substituent different from a carboxy group. As the substituent, for example, a functional group having reactivity with a hydroxy group of cellulose is preferable. Specific examples thereof include carboxylic halide groups such as a carboxylic chloride group; carboxylic anhydride groups; other groups such as an epoxy group and an isocyanate group, and halogen atoms such as a chlorine atom. Of these, for example, a carboxylic halide group such as a carboxylic chloride and an isocyanate group are preferable.

The alcohol (X2) is not particularly limited; however, examples include an aliphatic alcohol and a cyclic alcohol. They may be used singly or in combinations of two or more. Examples of the aliphatic alcohol include methanol, ethanol and propanol. Examples of the cyclic alcohol include an alicyclic alcohol and an aromatic alcohol. Examples of the alicyclic alcohol include a cyclohexanol and a cycloheptanol. Examples of the aromatic alcohol include benzyl alcohol.

When the phenol (X3) is a phenol (for example, C₆H₅OH) or a derivative thereof having 6 to 32 carbon atoms, the cellulose resin (X) can be referred to as a resin obtained by adding, for example, a phenoxy group (for example, C₆H₅O-) or a derivative thereof having 6 to 32 carbon atoms. The resin obtained by binding a phenol or a derivative thereof is prepared by reacting, for example, a hydroxy group of cellulose or a substituent thereof with a phenolic hydroxy group (-OH) of a phenol or a substituent thereof, thereby adding a phenoxy group (for example, C₆H₅O-) having 6 to 32 carbon atoms or a derivative thereof to the cellulose. More specifically, for example, the hydrogen atom H of the hydroxy group (-OH) of the cellulose is substituted with the phenyl group (C₆H₅-) or a derivative thereof, which is equivalent to the case where the phenoxy group (C₆H₅O-) or a derivative thereof is bound (added) to a carbon of the cellulose. The reaction between a hydroxy group of cellulose or a substituent thereof and a phenolic hydroxy group or a substituent thereof is, for example, a dehydration reaction to form an ether bond. In one of the hydroxy groups, for example, the hydrogen atom thereof, may be substituted with a halogen atom (X) such as Cl, F, Br and I. In this case, for example, a bond is formed between -OX and -OH by removing HOX.

As the phenol, cardanol or a derivative thereof is preferable. Cardanol is a component contained in cashew nutshell and an organic compound having a phenol moiety and a linear hydrocarbon moiety R, as shown in the following formula (2). Four types of cardanol compounds are present, which differ in the number of unsaturated bonds in a linear hydrocarbon group R. Cardanol usually comprises a mixture containing these 4 types of isomers, in other words, a mixture containing a compound (3-pentadecylphenol) having a pentadecyl group represented by R¹, a compound (3-pentadecylphenol monoene) having an 8-pentadecenyl group represented by R², a compound (3-pentadecylphenol diene) having a pentadecyl-8,11-diene group represented by R³ and a compound (3-pentadecylphenol triene) having a pentadecyl-8,11,14-triene group represented by R⁴, in the following formula (2). As the cardanol, for example, a cardanol component, which is extracted from cashew nutshell liquid and purified, can be used.

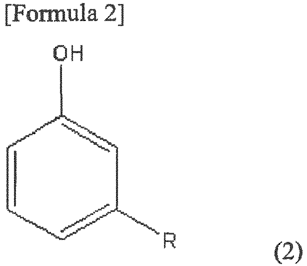

In the above formula (2), R is the following R¹, R², R³ or R⁴ and the hydrogen atom of the hydroxy group (OH) may be substituted.
R¹: -(CH₂)₁₄CH₃
R²: -(CH₂)₇CH=CH(CH₂)₅CH₃
R³: -(CH₂)₇CH=CHCH₂CH=CH(CH₂)₂CH₃
R⁴: -(CH₂)₇CH=CHCH₂CH=CHCH₂CH=CH₂

In the cardanol, the linear hydrocarbon group (R) contributes to improvement of, for example, flexibility and hydrophobicity of the resin; the phenol moiety has a highly reactive phenolic hydroxy group for use in grafting and the hydroxy group forms a glucoside bond with, for example, cellulose or a derivative thereof. When the cardanol or a derivative thereof is bound to cellulose or a derivative thereof, for example, a cellulose resin, in which cardanol components are bound like a brush, is formed. As a result, cardanol components bound to the cellulose or a derivative thereof via a glycoside bond mutually interact and can improve, for example, mechanical characteristics, in particular, toughness, and impart thermoplasticity. Furthermore, since cardanol has hydrophobicity, water resistance can be improved. When the glycoside bond is formed between cardanol and cellulose or a derivative thereof, for example, a dehydration catalyst such as sulfuric acid, toluenesulfonic acid and hydrogen chloride may be added.

In the cardanol, for example, the unsaturated bond (double bond) of the linear hydrocarbon group (R) moiety of the cardanol is preferably hydrogenated to change into a saturated bond. If a cardanol derivative in which the unsaturated bond of the linear hydrocarbon group is hydrogenated and sufficiently changed into a saturated bond, is used, for example, a side reaction is suppressed and cellulose can be efficiently bound to cardanol, and further reduction in solubility of a product in a solvent can be suppressed. The conversion rate (a hydrogenation rate) of an unsaturated bond by hydrogenation is, for example, preferably 90 mole% or more and more preferably 95 mole% or more. The residual ratio of an unsaturated bond in cardanol after hydrogenation, in other words, the number of unsaturated bonds per molecule of cardanol is, for example, preferably 0.2 bonds/molecule or less and more preferably 0.1 bonds/molecule or less. Furthermore, the aromatic ring of the phenol moiety of cardanol may be hydrogenated and changed into a cyclohexane ring.

A method for hydrogenating cardanol is not particularly limited and a conventional method can be used. Examples of the catalyst to be used in the hydrogenation reaction include a noble metal such as palladium, ruthenium and rhodium and a metal such as nickel. As the catalyst, for example, the above metals each immobilized onto a carrier such as activated carbon, activated alumina and diatomaceous earth can be used. As the reaction system for hydrogenation, for example, a batch system, in which a reaction is performed while suspending and stirring a powdery catalyst, and a continuous system using a reaction tower charged with a molded catalyst can be employed. The solvent to be used in the hydrogenation is not particularly limited; however, the solvent may be used depending upon, for example, the reaction system and may not be used. When a solvent is used, usually, examples include solvents such as an alcohol, an ether, an ester and a saturated hydrocarbon. The reaction temperature during hydrogenation, which is not particularly limited, usually can be set at, for example, 20 to 250°C and preferably 50 to 200°C in order to appropriately control the hydrogenation rate. The hydrogen pressure during hydrogenation, which is not particularly limited, usually can be set at 10 to 80 kgf/cm² (9.8 × 10⁵ to 78.4 × 10⁵ Pa) and preferably 20 to 50 kgf/cm² (19.6 × 10⁵ to 49.0 × 10⁵ Pa).

Hydrogenation of cardanol, for example, in the case where a cardanol derivative is bound to cellulose or a derivative thereof, can be performed in any time before and after the cardanol derivative is formed, and before and after the cardanol derivative is bound to cellulose. Of them, for example, in view of the reaction efficiencies or the like of hydrogenation and grafting, hydrogenation of cardanol is preferably performed before the cardanol derivative is bound to cellulose, and more preferably before the cardanol derivative is formed.

A phenol or a derivative thereof represented by (X3) can be grafted to cellulose or a derivative thereof by use of, for example, a polyfunctional compound having a functional group capable of binding to the hydroxy groups of both of them. Cellulose or a derivative thereof and a phenol or a derivative thereof can be bound via the polyfunctional compound. The cellulose to which the polyfunctional compound is bound is a cellulose derivative. A compound obtained by binding the polyfunctional compound to the hydroxy group of a phenol is a phenol derivative. If a polyfunctional compound is used, for example, a functional group of a polyfunctional compound is bound to the hydroxy group of a phenol to form a phenol derivative (for example, a cardanol derivative) and the functional group of the phenol derivative (for example, a cardanol derivative) can be bound to a hydroxy group of cellulose. If binding is made by way of the polyfunctional compound, for example, the reaction efficiency of the hydroxy group of cellulose can be improved and further a side reaction can be suppressed. Similarly, an alcohol or a derivative thereof represented by (X2) can be grafted to cellulose or a derivative thereof by use of, for example, a polyfunctional compound having a functional group capable of binding to the hydroxy groups of both of them. Cellulose or a derivative thereof and an alcohol or a derivative thereof can be bound via the polyfunctional compound. A compound obtained by binding the polyfunctional compound to the hydroxy group of an alcohol is an alcohol derivative.

The polyfunctional compound preferably has, for example, a hydrocarbon group and a functional group capable of binding to the hydroxy group of cellulose and a phenol (or alcohol) bound to the hydrocarbon group. The number of carbon atoms of the hydrocarbon group is not particularly limited. The lower limit thereof is preferably, for example, 1 or more and more preferably 2 or more; on the other hand, the upper limit thereof is preferably, for example, 20 or less, more preferably 14 or less and further preferably 8 or less. If the number of carbon atoms is set to fall within the range, for example, reduction in reactivity is suppressed, thereby improving the efficiency of grafting. As the hydrocarbon group, for example, a bivalent group is preferable. Specific examples thereof include bivalent linear aliphatic hydrocarbon groups such as a methylene group, an ethylene group, a propylene group, a butylene group, a pentamethylene group, a hexamethylene group, a heptamethylene group, an octamethylene group, a decamethylene group, a dodecamethylene group and a hexadecamethylene group; bivalent alicyclic hydrocarbon groups such as a cycloheptane ring, a cyclohexane ring, a cyclooctane ring, a bicyclopentane ring, a tricyclohexane ring, a bicyclooctane ring, a bicyclononane ring and a tricyclodecane ring; bivalent aromatic hydrocarbon groups such as a benzene ring, a naphthalene ring and a biphenylene group; and bivalent groups consisting of combinations thereof. Of these, for example, an acyclic alkylene group is preferable

When the hydrocarbon group is an aromatic hydrocarbon group or an alicyclic hydrocarbon group as mentioned above, since they are rigid, for example, the rigidity of the resultant resin can be improved. In contrast, when the hydrocarbon group is a linear aliphatic hydrocarbon group, since it is flexible, for example, the toughness of the resultant resin can be improved.

Examples of the functional group of the polyfunctional compound include, but are not particularly limited to, a carboxy group, a carboxylic anhydride group, a carboxylic halide group such as a carboxylic chloride, an epoxy group, an isocyanate group and a halogen atom. Of them, for example, a carboxy group, a carboxylic anhydride group, a halogen atom such as a chlorine atom and an isocyanate group are preferable. As the functional group to be reacted with the hydroxy group of a phenol or alcohol as mentioned above, for example, a carboxylic anhydride group, a halogen atom such as a chlorine atom and an isocyanate group are preferable. As the functional group to be reacted with a hydroxy group of cellulose or a derivative thereof, for example, a carboxylic halide group such as a carboxylic chloride group and an isocyanate group are preferable. The carboxylic halide group can be formed, for example, by changing a carboxy group to an acid halide group.

Specific examples of the polyfunctional compound include a dicarboxylic acid, a carboxylic anhydride, a dicarboxylic halide, monochlorocarboxylic acid and diisocyanate. Examples of the dicarboxylic acid include malonic acid, succinic acid, glutaric acid, pimelic acid, suberic acid, azelaic acid, sebacic acid, dodecane dicarboxylic acid, pentadecane dicarboxylic acid and hexadecane dicarboxylic acid. Examples of the carboxylic anhydride include anhydrides of the dicarboxylic acid as enumerated above. Examples of the dicarboxylic halide include acid halides of dicarboxylic acid as enumerated above. Examples of the monochlorocarboxylic acid include monochloroacetic acid, 3-chloropropionic acid, 3-fluoropropionic acid, 4-chlorobutyric acid, 4-fluorobutyric acid, 5-chlorovaleric acid, 5-fluorovaleric acid, 6-chlorohexanoic acid, 6-fluorohexanoic acid, 8-chlorooctanoic acid, 8-fluorooctanoic acid, 12-chlorododecanoic acid, 12-fluorododecanoic acid, 18-chlorostearic acid and 18-fluorostearic acid. Examples of the diisocyanates include tolylene diisocyanate (TDI), 4,4'-diphenylmethane diisocyanate (MDI), 1,5-naphthylene diisocyanate (NDI), tolidine diisocyanate, 1,6-hexamethylene diisocyanate (HDI), isophorone diisocyanate (IPDI), xylylene diisocyanate (XDI), hydrogenated XDI, triisocyanate, tetramethylxylene diisocyanate (TMXDI), 1,6,11-undecane triisocyanate, 1,8-diisocyanate methyloctane, lysine ester triisocyanate, 1,3,6-hexamethylene triisocyanate, bicycloheptane triisocyanate and dicyclohexylmethane diisocyanate (HMDI: hydrogenated MDI). Of these, for example, tolylene isocyanate (TDI), 4,4'-diphenylmethane diisocyanate (MDI) and 1,6-hexamethylene diisocyanate (HDI) are more preferable.

When grafting to cellulose or a derivative thereof is performed by use of a phenol (or alcohol) via a polyfunctional compound as mentioned above, grafting is performed via, for example, at least one of an ester bond, an ether bond and a urethane bond.

The carboxylic acid, alcohol, phenol or any one of derivatives thereof mentioned above may have a group derived from an organic silicon compound, an organic fluorine compound and the like in the structure in order to obtain, for example, water resistance improvement effect.

The grafting ratio of cellulose or a derivative thereof by the carboxylic acid, alcohol, phenol or any one of derivatives of these is not particularly limited. The grafting ratio is represented by, for example, the average number of hydroxy groups contained in a glucose unit of cellulose or a derivative thereof and reacted with the carboxylic acid, alcohol, phenol or derivatives thereof, in other words, degree of hydroxy group substitution (DS_{XX}). The degree of hydroxy group substitution is, in view of, for example, water resistance, mechanical characteristics and heat resistance, preferably 0.1 or more and 2.9 or less, more preferably 0.2 or more and 2.8 or less and further preferably 0.4 or more and 2.8 or less; and for example, can be set to be 1.0 or more and 2.8 or less. The average number of hydroxy groups remaining in a glucose unit of cellulose or a derivative thereof, in other words, degree of residual hydroxy groups (DS_{OH}) is, in order to sufficiently obtain water resistance, mechanical strength and plasticity, for example, preferably 0.9 or less and more preferably 0.7 or less.

The grafting ratio of cellulose or a derivative thereof by cardanol or a derivative thereof is not particularly limited. The grafting ratio is represented by, for example, the average number of hydroxy groups contained in a glucose unit of cellulose or a derivative thereof and bound to the cardanol or a derivative thereof, in other words, degree of hydroxy group substitution (DS_{CD}). The degree of hydroxy group substitution is, in view of, for example, improvement of water resistance, mechanical characteristics and heat resistance, preferably, 0.1 or more, more preferably 0.2 or more and further preferably 0.4 or more.

The maximum value of DS_{CD} is theoretically "3"; however, to attain efficient binding, it is, for example, preferably 2.5 or less, more preferably 2 or less and further preferably 1.5 or less. DS_{CD} may be, for example, 1 or less. Also in this case, a sufficient improvement effect can be obtained. DS_{CD} can be appropriately set, for example, depending upon the desired properties. If DS_{CD} is set, for example, the upper limit or less, for example, increase in tensile breaking strain and bending breaking strain (toughness) is sufficiently suppressed and reduction in the maximum strength (drawing strength, bending strength) can be sufficiently suppressed. The average number of hydroxy groups remaining in a glucose unit of cellulose or a derivative thereof, to which cardanol or a derivative thereof is bound, in other words, degree of residual hydroxy groups (DS_{OH}), is preferably 0.9 or less and more preferably 0.7 or less in order to sufficiently obtain, for example, water resistance, mechanical strength and plasticity.

Grafting to cellulose or a derivative thereof by a carboxylic acid, an alcohol, a phenol or any one of derivatives thereof as mentioned above can be performed, for example, in a solvent. As the solvent, for example, a solvent capable of dissolving cellulose or a derivative thereof, a carboxylic acid, an alcohol, a phenol or derivatives of these as mentioned above is preferable. The grafting reaction is preferably performed, for example, by heating at an appropriate temperature. As the solvent for dissolving cellulose or a derivative thereof, for example, a dimethylsulfoxide-amine solvent, a dimethylformamide-chloral-pyridine solvent, a dimethyl acetamide-lithium chloride solvent and an imidazolium ionic liquid can be used. Since the solubility in a general solvent can be improved, a cellulose derivative previously improved in solubility by reducing intermolecular force thereof by binding a carboxylic acid, an alcohol, a phenol or any one of derivatives thereof as mentioned above to part of hydroxy groups of cellulose or a derivative thereof, may be used in a grafting reaction. Examples of the solvent include dioxane, chloroform, methylene chloride and acetone. Specific examples of the cellulose derivative include an acylated cellulose such as acetyl cellulose, propionyl cellulose, butyryl cellulose, cellulose acetate propionate and cellulose acetate butyrate. Of them, particularly acetyl cellulose is preferable.

The acylation ratio in the acylated cellulose can be represented by, for example, the average number of hydroxy groups acylated and contained in a glucose unit of cellulose or a derivative thereof, in other words, by degree of hydroxy group substitution (DS_{AC}). The degree of hydroxy group substitution (DS_{AC}) is, for example, preferably 0.5 or more, more preferably 1.0 or more and further preferably 1.5 or more in order to increase solubility of cellulose. For example, in order to efficiently graft cellulose or a derivative thereof, DS_{AC} is preferably 2.9 or less and more preferably 2.8 or less.

As described above, grafting to cellulose or a derivative thereof can be performed by the reaction using a hydroxy group of the acylated cellulose and a functional group (a carboxy group, a hydroxy group) of the carboxylic acid, alcohol or phenol (for example cardanol) mentioned above.

### (3) Linear aliphatic polyester or a crosslinked product thereof (Y)

A linear aliphatic polyester or a crosslinked product thereof (Y) is at least one of linear aliphatic polyesters (Y1) and (Y2) or a crosslinked product thereof.

The linear aliphatic polyester (Y1) is a linear aliphatic polyester containing at least one of the repeat units represented by the above formula (I) and formula (II).

In the above formula (I), the number of carbon atoms of a bivalent aliphatic group represented by R¹ is 1 to 12, preferably 2 to 8 and more preferably 2 to 4. Furthermore, the number of carbon atoms of a bivalent aliphatic group represented by R² is 2 to 12, preferably 2 to 8 and more preferably 2 to 4.

In the above formula (II), the number of carbon atoms of a bivalent aliphatic group represented by R³ is 2 to 10, preferably 2 to 8 and more preferably 2 to 4.

The linear aliphatic polyester (Y1), which is a polyester formed of units represented by formula (I), can be obtained by, for example, a condensation reaction between at least one selected from the group consisting of an aliphatic dicarboxylic acid, an acid anhydride thereof and a diester product thereof, and an aliphatic diol. Moreover, the linear aliphatic polyester (Y1), which is a polyester formed of units represented by formula (II), can be obtained by a condensation reaction of a carboxylic acid having a hydroxy group (hydroxycarboxylic acid) or an ester product thereof. Furthermore, the linear aliphatic polyester (Y1), which is a polyester containing units represented by formula (I) and formula (II), can be obtained by a condensation reaction among at least one selected from the group consisting of an aliphatic dicarboxylic acid, an acid anhydride thereof and a diester product thereof, an aliphatic diol, and a hydroxycarboxylic acid or an ester product thereof. Examples of the hydroxy carboxylic acid include a hydroxycarboxylic acid having 2 to 10 carbon atoms such as glycol acid and 4-hydroxybutyric acid.

The aliphatic dicarboxylic acid has, for example, 3 to 12 carbon atoms, preferably 3 to 9 carbon atoms and more preferably 3 to 5 carbon atoms. The aliphatic carboxylic acid is, for example, an alkane dicarboxylic acid. Specific examples thereof include malonic acid, succinic acid, adipic acid, sebacic acid, azelaic acid and dodecane dicarboxylic acid. The aliphatic dicarboxylic acids may be used, for example, singly or in combinations of two or more.

The aliphatic diol has, for example, 2 to 12 carbon atoms, preferably 2 to 8 carbon atoms and more preferably 2 to 6 carbon atoms. The aliphatic diol is, for example, an alkylene glycol. Specific examples thereof include ethylene glycol, 1,3-propylene glycol, 1,4-butanediol, 1,6-hexanediol, 1,9-nonanediol, 1,10-decanediol and 1,12-dodecanediol. Of them, a linear aliphatic diol having 2 to 6 carbon atoms is preferable and particularly, ethylene glycol, 1,3-propylene glycol, 1,4-butanediol and 1,6-hexanediol are preferable. The aliphatic diols may be used, for example, singly or in combinations of two or more.

The linear aliphatic polyester (Y2) is a linear aliphatic polyester including a ring-opening polymerization product of a cyclic ester. Examples of the cyclic ester include a lactone having 2 to 12 carbon atoms. Specific examples thereof include α-acetolactone, β-propiolactone, γ-butyrolactone and δ-valerolactone. The cyclic esters may be used, for example, singly or in combinations of two or more.

The number average molecular weight of the linear aliphatic polyester (Y) is not particularly limited. The lower limit value thereof is, for example, preferably 10000 or more and more preferably 20000 or more; on the other hand, the upper limit value thereof is, for example, preferably 200000 or less and more preferably 100000 or less. If the molecular weight of the linear aliphatic polyester (Y) is set to fall within the range, for example, dispersibility thereof in a resin composition becomes more excellent and more uniform molded article can be obtained.

As the number average molecular weight or weight average molecular weight, for example, a measurement value (corrected based on polystyrene standard sample) by GPC using a 0.1 % by mass chloroform solution of a sample, can be employed.

The content of the linear aliphatic polyester (Y) in the cellulose resin composition is not particularly limited; however, it is, for example, preferably 1 % by mass or more and more preferably 5 % by mass or more relative to the total of the cellulose resin composition, in order to sufficiently improve, for example, the impact resistance of the resultant molded article. The content is, for example, preferably 90 % by mass or less, more preferably 70 % by mass or less and further preferably 60 % by mass or less relative to the total of the cellulose resin composition, in order to sufficiently obtain, for example, the properties of the cellulose resin such as strength. The content is, for example, preferably 50 % by mass or less and more preferably less than 50 % by mass relative to the total of the cellulose resin composition, in order to sufficiently obtain, for example, transparency. The content ratio of the cellulose resin (X) to the linear aliphatic polyester or a crosslinked product thereof (Y) (mass ratio, X:Y) preferably falls, for example, within the range of 95:5 to 30:70, more preferably within the range of 90:10 to 30:70 and particularly preferably within the range of 90:10 to 40:60.

### (4) Cellulose resin composition

The cellulose resin composition according to the exemplary embodiment can be obtained by mixing a linear aliphatic polyester (Y) as mentioned above with a cellulose resin (X), for example, by sufficiently dispersing the linear aliphatic polyester in the cellulose resin at a molecular level. A molded article of the cellulose resin composition, which is obtained by mixing a linear aliphatic polyester or a crosslinked product thereof (Y) with a cellulose resin (X), can facilitate shear deformation during impact breaking, thereby improving impact resistance.

To the cellulose resin composition, if necessary, for example, additives such as a coloring agent, an antioxidant, a heat stabilizer, a plasticizer and a fire retardant may be added.

As the method for producing the cellulose resin composition, which is not particularly limited, a method known in the art can be employed as long as a cellulose resin (X) and a linear aliphatic polyester (Y) are used. More specifically, for example, the cellulose resin composition can be produced by manually mixing a cellulose resin, a linear aliphatic polyester and, if necessary, additives, followed by melting, or by melt-blending using a mixer (for example, a compounding apparatus such as a tumbler mixer, a ribbon blender, a single-screw or multi-screw extruder, a kneader and kneading roll) and, if necessary, granulating into a desired shape. Examples of another preferable production method include a method in which a cellulose resin, a linear aliphatic polyester and, if necessary, additives, are mixed by dispersing them in, for example, a solvent such as an organic solvent; and if necessary, a solvent for coagulation is further added to obtain a mixture composition, and thereafter the solvent(s) is evaporated.

The form of the cellulose resin composition according to the exemplary embodiment, which is not particularly limited, may be a solution or a solid matter such as pellets, powders, particles and blocks.

The cellulose resin composition can be used as, for example, a molding material and is suitable as, for example, a material for a molding an article such as cases including outer packages for electronic devices.

It is characterized in that the molding material according to the exemplary embodiment contains the cellulose resin composition and is useful as a raw material for molding various articles, for example, cases such as outer packages for electronic devices. Such a molding material preferably contains the cellulose resin composition as a base resin.

The base resin refers to the main component of a molding material. Other components may be contained as long as they do not interfere with the function of the main component. In the molding material according to the exemplary embodiment, the content ratio of the base resin (i.e., the cellulose resin composition according to the exemplary embodiment) serving as a main component, which is not particularly limited, is, for example, preferably 30 % by mass or more, more preferably 50 % by mass or more, further preferably 70 % by mass or more and particularly preferable 80 % by mass or more of the total material.

The molding material according to the exemplary embodiment may contain e.g., a binder and a solvent in addition to the cellulose resin composition.

The form of the molding material according to the exemplary embodiment, which is not particularly limited, may be a solution or a solid matter such as pellets, powders, particles and blocks.

It is characterized in that the molded article according to the exemplary embodiment uses the molding material. The molded article according to the exemplary embodiment is satisfactory as long as the molding material is used and the other constitution is not particularly limited. Examples of the molded article include cases such as outer packages for electronic devices, interior parts of electronic devices, sheets, films and package containers.

### Examples

Now, the present invention will be more specifically described by way of Examples.

### [Cellulose resin]

As the cellulose resin, cellulose resins 1, 2 and 3 described below were prepared.

### (1) Cellulose resin 1

As cellulose resin 1, cellulose acetate propionate (product name: CAP482-20, manufactured by Eastman Chemical Company) was used.

The acetylation ratio of hydroxy groups per glucose unit of the above cellulose resin (degree of hydroxy group substitution by acetylation): DS_{Ace} = 0.18.

The propionylation ratio of hydroxy groups per glucose unit of the above cellulose resin (degree of hydroxy group substitution by propionylation): DS_{Pro} = 2.49.

### (2) Cellulose resin 2

As cellulose resin 2, cellulose acetate propionate (product name: CAB381-20, manufactured by Eastman Chemical Company) was used.

The acetylation ratio of hydroxy groups per glucose unit of the above cellulose resin (degree of hydroxy group substitution by acetylation): DS_{Ace} = 1.0

The butyrylation ratio of hydroxy groups per glucose unit of the above cellulose resin (degree of hydroxy group substitution by butyrylation): DS_{Bu} = 1.66.

### (3) Cellulose resin 3

Cardanol-grafted cellulose acetate propionate was prepared as cellulose resin 3 according to Synthesis Examples 1 to 4 described below.

### (3-1) Synthesis Example 1: Hydrogenated cardanol

Cardanol represented by the above formula (2) was hydrogenated to prepare 3-pentadecyl cyclohexanol as a hydrogenated cardanol.

First, to a batch-system autoclave of 1.0 liter in inner volume, cardanol (20 g), which was obtained from cashew nut oil treated with heat by distillation purification, ruthenium/carbon catalyst (Ru: 5 % by mass)(2 g) and tetrahydrofuran (20 mL) were supplied. A hydrogenation reaction was performed at room temperature by supplying hydrogen under application of pressure at 20 kgf/cm² (1.96 × 10⁶ Pa) and stirring at 80°C for 3 hours. Thereafter, the reaction solution was taken out from the autoclave and filtered by a membrane filter made of a fluorine resin and having an average pore size of 0.2 µm to remove the ruthenium/carbon catalyst. The obtained filtrate was heated under reduced pressure to distill away tetrahydrofuran. In this manner, hydrogenated cardanol (20.6 g) was obtained at room temperature as a white solid substance.

The purity of the obtained hydrogenated cardanol was measured with a liquid chromatograph (product name: LC-10ADVP, manufactured by Shimadzu Corporation). As a result, the purity was 99 % by mass. Furthermore, the obtained hydrogenated cardanol was measured by ¹H-NMR (product name: AV-400, 400 MHz, manufactured by Bruker Corporation). As a result, the hydrogenation rate (a conversion rate of double bonds in hydrocarbon moiety and an aromatic ring) was 99 mol% or more.

### (3-2) Synthesis Example 2: Diisocyanate added cardanol derivative

The temperature of hexamethylene diisocyanate (HDI)(92.7 g (0.55 mol)) was raised to 50°C while stirring. To this, the hydrogenated cardanol (17.1 g (0.055 mol)) obtained in Synthesis Example 1 was added and continuously stirred at 80°C for 3 hours. After the reaction solution was cooled to 40°C, acetonitrile (375 mL) was added. The solution mixture was stirred at room temperature for one hour and then allowed to stand still at -15°C for 17 hours. From the resultant reaction solution, crystals were filtered (5A, 185 mmϕ) and washed while supplying acetonitrile (125 mL) cooled on ice. The obtained crystal was added to acetonitrile (125 mL) to prepare slurry, which was stirred at room temperature for one hour. After the slurry was allowed to stand still at -15°C overnight, the crystal was filtered (5A, 185 mmϕ) at 30°C for 6 hours and dried under reduced pressure (to 0.4 kPa). In this manner, diisocyanate-added cardanol derivative (22.61 g), in which HDI and hydrogenated cardanol were bound in a mole ratio of 1:1, was obtained as a white powder (dry crystal).

The obtained diisocyanate-added cardanol derivative was measured with a liquid chromatograph (product name: LC-10ADVP, manufactured by Shimadzu Corporation). As a result, the purity was 91 % by mass.

### (3-3) Synthesis Example 3: Cardanol-grafted cellulose acetate

The diisocyanate-added cardanol derivative obtained in Synthesis Example 2 was allowed to bind to cellulose acetate (product name: LM-80, manufactured by Daicel Corporation, acetylation ratio of hydroxy groups per glucose unit of cellulose: DS_{Ace} = 2.1) to obtain cardanol-grafted cellulose acetate.

More specifically, first, to the cellulose acetate (27.5 g, (0.11 mol/Glc)) obtained above, dehydrated dioxane (385 mL) was added and dissolved at a liquid temperature of 80 to 88°C over one hour. Then, the solution was cooled to 40°C and dibutyltin laurate (0.276 g (0.437 mmol)), which was dissolved in dehydrated dioxane (2.8 mL), was added to this. Subsequently, to this, the diisocyanate-added cardanol derivative (11.56 g (purity: 91.0%, 0.022 mol)) synthesized in Synthesis Example 2, which was previously dissolved in dehydrated dioxane (50 mL) by heating, was added. The resultant mixture was stirred at a liquid temperature of 80°C for 3 hours. While the solution was maintained at 80°C, a diisocyanate-added cardanol derivative (11.05 g (purity: 91.0%, 0.022 mol)), which was previously dissolved in dehydrated dioxane (50 mL) by heating, was added. The solution mixture was stirred at 80°C for 18 hours. After the solution was cooled to 30°C, methanol (4.5 L) was added thereto while stirring to precipitate a polymer. The polymer was filtered and dried at 105°C for 14 hours under reduced pressure (to 0.7 kPa) to obtain a dry polymer (43.9 g). To the dry polymer, methyl ethyl ketone (600 mL) was added. The mixture was stirred at a liquid temperature of 70 to 80°C for one hour to dissolve the polymer and then cooled to 30°C. Subsequently, the polymer solution was centrifuged and a non-soluble matter was separated by sedimentation (3500 rpm × 15 minutes). To the polymer solution, from which the non-soluble matter was separated and removed, hexane (1 L) was added, to precipitate the polymer. The polymer was filtered and washed twice (hexane (1 L) × twice). The obtained polymer was dissolved in methyl ethyl ketone while heating, cooled and then subjected to centrifugation, separation by sedimentation, polymer precipitation and washing with hexane. After this operation was repeated further twice, the polymer was dried at 50°C, for 14 hours under reduced pressure (to 0.8 kPa) to obtain cardanol-grafted cellulose acetate (36.4 g).

### (3-4) Synthesis Example 4: Cardanol-grafted cellulose acetate propionate

The cardanol-grafted cellulose acetate (36.4 g) obtained in Synthesis Example 3 and dehydrated pyridine (310 mL) were supplied and the solution mixture was dissolved at a liquid temperature of 75 to 80°C over 20 minutes. To the solution, N,N-dimethylaminopyridine (18.3 g (0.15 mol)) and propionic anhydride (390 mL) were added at a liquid temperature of 76°C and stirred at a liquid temperature of 100°C for one hour. After the solution was cooled to a liquid temperature of 30°C, methanol (130 mL) while ice-cooling was added over 70 minutes while keeping the reaction solution at a liquid temperature of 30 to 40°C. Methanol (250 mL) was further added while stirring the reaction solution to precipitate a polymer. The polymer was filtered and washed twice (methanol (200 mL) × twice). The obtained polymer was dried and then dissolved in chloroform (250 mL) at a liquid temperature of 60°C. After the solution was cooled, methanol (1.3 L) was added while stirring to precipitate the polymer. The polymer was filtered and washed twice (methanol (100 mL) × twice). Thereafter, the polymer was dried at 105°C for 16 hours under reduced pressure (to 0.7 kPa) to obtain cardanol-grafted cellulose acetate propionate (35.8 g).

The obtained cardanol-grafted cellulose acetate propionate was measured by ¹H-NMR (product name: AV-400, 400 MHz, manufactured by Bruker Corporation). As a result, DS_{Ace} was 2.1, DS_{Pro} was 0.59, and DS_{CD} was 0.25.

### (4) Cellulose resin 4

Cardanol-grafted cellulose acetate was prepared as cellulose resin 4 in accordance with Synthesis Examples 5 and 6 described below.

### (4-1) Synthesis Example 5: Acid chlorinated hydrogenated cardanol

Monochloroacetic acid modified cardanol (carboxylated hydrogenated cardanol) was prepared and then a chloride compound thereof was prepared. As the raw material, m-n-pentadecylphenol (3-pentadecylphenol, product name: ACROS, manufactured by Acros Organics) represented by the above formula (2), which is hydrogenated cardanol obtained by hydrogenating an unsaturated bond of a linear hydrocarbon moiety of cardanol, was used. Carboxylated hydrogenated cardanol was obtained by reacting a phenolic hydroxy group of the raw material with monochloroacetic acid and then the carboxy group of the carboxylated hydrogenated cardanol was chlorinated by oxalyl chloride and changed into an acid chloride group to obtain acid chlorinated hydrogenated cardanol. A method for obtaining the acid chlorinated hydrogenated cardanol will be more specifically described below.

First, hydrogenated cardanol (3-pentadecylphenol)(80 g (0.26 mol)) was dissolved in methanol (120 mL). To this, an aqueous solution of sodium hydroxide (64 g (1.6 mol)) dissolved in distilled water (40 mL) was added. To the solution, a solution of monochloroacetic acid (manufactured by Kanto Chemical Co., Inc.)(66 g (0.70 mol)) dissolved in methanol (50 mL) was further added dropwise at room temperature. After completion of dropwise addition, the reaction solution was continuously stirred while refluxing at 73°C for 4 hours and then cooled to room temperature. After the reaction solution was acidified with diluted hydrochloric acid until pH reached 1, methanol (250 mL) and diethyl ether (500 mL) were added and further, distilled water (200 mL) was added. The solution mixture was put in a separatory funnel to separate into a water layer and an ether layer. The water layer was discarded and the ether layer was washed twice with distilled water (400 mL). The ether layer was recovered and dried by adding anhydrous magnesium and filtered off. The obtained filtrate (ether layer) was concentrated under reduced pressure (90°C/3 mmHg) by an evaporator to obtain a yellow-brown powdery crude product as the residue. The crude product was recrystallized from n-hexane and dried under in vacuo to obtain carboxylated hydrogenated cardanol as a white powder (46 g (0.12 mol)).

The obtained carboxylated hydrogenated cardanol (46 g, (0.12 mol)) was dissolved in dehydrated chloroform (250 mL). Oxalyl chloride (24 g (0.19 mol)) and N,N-dimethyl formamide (0.25 mL (3.2 mmol)) were added and stirred at room temperature for 72 hours. Thereafter, chloroform and excessive oxalyl chloride were distillated away under reduced pressure to obtain acid chlorinated hydrogenated cardanol (48 g (0.13 mol)).

### (4-2) Synthesis Example 6: Cardanol-grafted cellulose acetate

The acid chlorinated hydrogenated cardanol (cardanol derivative) obtained in Synthesis Example 5 was allowed to bind to cellulose acetate (product name: LM-80, manufactured by Daicel Corporation, the acetylation ratio of hydroxy groups per glucose unit of cellulose: DS_{Ace} = 2.1) to obtain grafted cellulose acetate.

More specifically, first, the cellulose acetate (30 g (the amount of hydroxy group: 0.108 mol)) was dissolved in dehydrated dioxane (600 mL) and triethyl amine (15 mL (0.108 mol)) was added as a reaction catalyst and an acid trapping agent. To the solution, a dioxane solution (300 mL) dissolving acid chlorinated hydrogenated cardanol (32 g (0.084 mol)) obtained in Synthesis Example 5 was added. The reaction solution was heated to reflux at 100°C for 5 hours and slowly added dropwise to methanol (4.5 L) while stirring. In this manner, reprecipitation was performed and the precipitated solid matter was separated by filtration. The solid matter thus separated was dried in the air overnight and further dried in vacuo at 105°C for 5 hours. In this manner, cardanol-grafted cellulose acetate (23 g) was obtained as cellulose resin 4.

The obtained cardanol-grafted cellulose acetate (cellulose resin 4) was measured by ¹H-NMR (product name: AV-400, 400 MHz, manufactured by Bruker Corporation). As a result, DS_{CD} was 0.47.

### (5) Cellulose resin 5

A long/short chain bound cellulose derivative was prepared as cellulose resin 5 in accordance with Synthesis Examples 7 to 9 described below.

### (5-1) Synthesis Example 7: Synthesis of hydrogenated cardanoxy acetic acid

Hydrogenated cardanol (product name: ACROS, manufactured by Organics, m-n-pentadecylphenol), which was obtained by hydrogenating an unsaturated bond of the linear hydrocarbon moiety of cardanol, was used as a raw material. The phenolic hydroxy group of the hydrogenated cardanol was allowed to react with monochloroacetic acid to add a carboxymethyl group thereto. In this manner, hydrogenated cardanoxy acetic acid (CH₃(CH₂)₁₄-C₆H₄-O-CH₂-COOH) was obtained. More specifically, hydrogenated cardanoxy acetic acid was prepared in accordance with the following procedure.

First, hydrogenated cardanol (80 g (0.26 mol)) was dissolved in methanol (120 mL). To this, an aqueous solution of sodium hydroxide (64 g (1.6 mol)) dissolved in distilled water (40 mL) was added.

Thereafter, a solution dissolving monochloroacetic acid (66 g (0.70 mol)) manufactured by Kanto Chemical Co., Inc. in methanol (50 mL) was added dropwise at room temperature. After completion of dropwise addition, the solution was continuously stirred while refluxing at 73°C for 4 hours. The reaction solution, which was cooled to room temperature, was acidified with diluted hydrochloric acid until pH reached 1. Thereafter, methanol (250 mL), diethyl ether (500 mL) and further distilled water (200 mL) were added. The water layer was separated by a separatory funnel and discarded, and the ether layer was washed twice with distilled water (400 mL). After anhydrous magnesium sulfate was added to the ether layer, dried and filtrated off. The filtrate (ether layer) was concentrated under reduced pressure (90°C/3 mmHg) by an evaporator to obtain a yellow-brown powdery crude product as a solid content. The obtained crude product was recrystallized from n-hexane and dried in vacuo.

A hydrogenated cardanoxy acetic acid (CH₃(CH₂)₁₄-C₆H₄-O-CH₂-COOH) was obtained by the above procedure as a white powder (46 g (0.12 mol)).

### (5-2) Synthesis Example 8: Synthesis of mixture of acid anhydride 1 (hydrogenated cardanoxy acetic acid/acetic acid mixture anhydride)

The hydrogenated cardanoxy acetic acid of Synthesis Example 7 was mixed with anhydrous acetic acid and heated to obtain a mixture of acid anhydride 1 (hydrogenated cardanoxy acetic acid/acetic acid mixture anhydride, CH₃(CH₂)₁₄-C₆H₄-O-CH₂-CO-O-CO-CH₃). More specifically, the mixture of acid anhydride 1 was prepared in accordance with the following procedure.

Hydrogenated cardanoxy acetic acid (40.2 g (0.11 mol)) of Synthesis Example 7 and anhydrous acetic acid (21.0 mL (0.22 mol)) were stirred while heating at 100°C for one hour. In this manner, mixture 1 containing the mixture of acid anhydride 1 was obtained.

The obtained mixture 1 was analyzed by ¹H-NMR (product name: AV-400, 400 MHz, manufactured by Bruker Corporation). As a result, the mole ratio of anhydrous acetic acid, mixture of acid anhydride 1, hydrogenated cardanoxy acetic acid anhydride, hydrogenated cardanoxy acetic acid and acetic acid contained in mixture 1 was 43.0:20.8:2.0:10.0:24.2 in this order.

### (5-3) Synthesis Example 9: Synthesis of long/short chain bound cellulose derivative (cellulose resin 5)

After an activation treatment of cellulose was performed, a mixture of acid anhydride 1 of Synthesis Example 8 was allowed to react to obtain a long/short chain bound cellulose derivative. More specifically, the long/short chain bound cellulose derivative was prepared in accordance with the following procedure.

First, the activation treatment of cellulose was performed by the following method.

Cellulose (product name: KC flock, bland name: W-50GK manufactured by NIPPON PAPER INDUSTRIES CO., LTD. CHEMICAL DIVISION)(6.37 g)(weight including an adsorbed water content of 6.23%: cellulose content: 6.0 g (0.037 mol/glucose unit)) was dispersed in pure water (90 mL). The dispersion solution was stirred for 15 minutes and filtered by suction for 5 minutes to remove the pure water. The obtained solid content was dispersed in acetic acid (90 mL) and stirred for 15 minutes and filtered by suction for 5 minutes to remove the acetic acid. The operation of dispersion in acetic acid and removal of acetic acid was performed twice. In this manner, activated cellulose was obtained.

Next, a cellulose derivative was synthesized by the following method.

The activated cellulose obtained above was dispersed in N-methylpyrrolidinone (NMP)(150 mL). To the dispersion solution, dimethylaminopyridine (DMAP)(3.0 g) and the mixture of acid anhydride 1 of Synthesis Example 8 were added and stirred while heating at 100°C for 15 hours. Thereafter, to the reaction solution, methanol (1.5 L) was added and reprecipitation was performed and a solid matter was separated by filtration. The solid content thus separated was washed twice with isopropyl alcohol (150 mL) of 60°C and dried in vacuo at 105°C for 5 hours. In this manner, the long/short chain bound cellulose derivative (17.6 g) was obtained.

The degree of substitution (DS_{SH}) of short chain acyl group of the obtained long/short chain bound cellulose derivative and the degree of substitution (DS_{LO}) of long chain acyl group thereof were measured by IR (product name: FT/IR-4100, manufactured by JASCO Corporation). As a result, DS_{SH} was 2.02, and DS_{LO} was 0.53. Based on the IR measurement results, the number of remaining hydroxy groups per glucose unit (degree of hydroxy group substitution, DS_{OH}) (an average value) DS_{OH} is estimated as 0.45.

DS_{LO} according to the above IR measurement was computationally obtained based on the intensity of stretching peak (1586 cm⁻¹) derived from the benzene ring skeleton. DS_{SH} according to the IR measurement was specified as a value obtained by subtracting DS_{LO} from the degree of substitution of total acyl groups (DS_{SH} + DS_{LO}), which was determined based on the intensity of stretching peak (1750 cm⁻¹) of C=O the ester bond. These peak intensity values were normalized based on the intensity of the stretching peak (1050 cm⁻¹) of the ether bond in a glucopyranose ring. The relationship between the degree of substitution and peak intensity was corrected based on a reference material (degrees of substitution, DS_{SH} and DS_{LO}, can be calculated by NMR) synthesized from acetyl cellulose (2,6-diacetyl cellulose) and hydrogenated cardanoxy acetic acid chloride.

Note that the obtained long/short chain bound cellulose derivative was partly soluble in chloroform. Thus, DS_{SH} and DS_{LO} of the soluble matter were measured by ¹H-NMR (product name: AV-400, 400 MHz, manufactured by Bruker). As a result, DS_{SH} was 2.4 and DS_{LO} was 0.6.

### [Aliphatic polyester]

A linear aliphatic polyester and branched aliphatic polyester were prepared as described below.

### (1) Linear aliphatic polyester

As a linear aliphatic polyester, three types: polybutylene succinate (PBS) (product name: BIONOLLE 1001MD, or BIONOLLE 1020MD manufactured by Showa Denko K.K.), polybutylene succinate adipate (PBSA) (product name: BIONOLLE 3001MD, manufactured by Showa Denko K.K.) and polycaprolactone (PCL) (product name: CELGREEN PH7, manufactured by Daicel Corporation) having a repeat unit represented by [-(CH₂)₅CO-O-]ₙ were used. The molecular weight of the polycaprolactone was obtained by subjecting it to gel permeation chromatography (product name: LC-10ADvp CLASS-VP system, manufactured by Shimadzu Corporation) using a chloroform solution (1 % by mass) and converting the resultant value in terms of polystyrene. As a result, the number average molecular weight (Mn) was 26,683 and the weight average molecular weight (Mw) was 54,980.

### (2) Branched aliphatic polyester

As a branched aliphatic polyester, polylactic acid (product name: TERRAMAC TE-4000N, manufactured by Unitika Limited.) and poly-3-hydroxybutyrate (product name: Biogreen, manufactured by Mitsubishi Gas Chemical Company, Inc.) were used.

### [Compatibility accelerator]

As a compatibility accelerator, a graft copolymer (product name: MODIPER A4400, manufactured by NOF Corporation) obtained by grafting a styrene-acrylonitrile copolymer to an ethylene-glycidyl methacrylate copolymer, was used.

### [Reinforcement fiber]

As a reinforcement fiber, a glass fiber (product name: 03JAFT792 (ϕ10 µm), manufactured by OWENS CORNING) and a cellulose fiber (product name: KC flock W-50GK, manufactured by NIPPON PAPER INDUSTRIES CO., LTD. CHEMICAL DIVISION) were used.

### [Flame retardant]

As a flame retardant, an aromatic phosphoric ester (product name: cresyl diphenyl phosphate (CDP), manufactured by Daihachi Chemical Industry Co., Ltd., and a metal hydroxide (low soda aluminum hydroxide, product name: BE033, manufactured by Nippon Light Metal Co., Ltd, average particle diameter: 3 µm, the content of alkali metal substance: 0.02 % by mass) were used.

### [Crosslinking agent]

As a crosslinking agent for forming a crosslinked product of a linear polyester resin, aliphatic polycarbodiimide (product name: CARBODILITE LA-1, manufactured by Nisshinbo Chemical Inc.) and aromatic polycarbodiimide (product name: Stabaxol P, manufactured by Rhein Chemie) were used.

The aforementioned polybutylene succinate adipate (product name: BIONOLLE 3001MD, manufactured by Showa Denko K.K.) as a linear aliphatic polyester, and CARBODILITE LA-1 or Stabaxol P as a crosslinking agent were blended in accordance with the formulations (mass ratio) shown in the following table and melt-kneaded by a twin-screw kneader (product name: HAKKE-MiniLab Micro-Extruder, manufactured by Thermo Electron Corp.) at 180°C and a rotation number of 60 rpm for 15 minutes to obtain crosslinked linear polyester resins PBSA-1 to 4.

[Table 1]

**Table 1**

| | PBSA-1 | PBSA-2 | PBSA-3 | PBSA-4 |
|---|---|---|---|---|
| PBSA (BIONOLLE 3001MD) | 95% | 95% | 99% | 99% |
| Aliphatic polycarbodiimide (CARBODILITE LA-1) | 5% | - | 1% | - |
| Aromatic polycarbodiimide (Stabaxol P) | - | 5% | - | 1% |
| Kneading temperature | 180°C | 180°C | 180°C | 180°C |

### [Evaluation of properties]

Various properties of molded articles (test pieces) described later were evaluated by the following methods.

### (1) Evaluation of compatibility

Appearance of molded articles (test pieces) was visually observed and compatibility was evaluated based on the following criteria. Evaluation results of the compatibility represented by O, O to Δ and Δ were determined as acceptable levels for practical realization.

○: transparent (completely dissolved)
○ to Δ: semitransparent (highly dispersed)
Δ: white turbidity (homogeneously dispersed)
× : nonuniformly dispersed

### (2) Evaluation of Izod impact strength

Notched Izod impact strength of molded articles (test pieces) was measured in accordance with JIS K7110. The impact strength of 6.0 kJ/m² or more was determined as an acceptable level for practical realization. Note that the strength is preferably 6.2 kJ/m² or more, more preferably 6.9 kJ/m² or more, further preferably 8.0 kJ/m² or more and particularly preferably 9.0 kJ/m² or more.

### (3) Evaluation of bending strength

A bending test of molded articles (test pieces) was performed in accordance with JIS K7171. The bending strength of 15 MPa or more, the bending elastic modulus of 0.4 GPa or more, and the bending strain of 6% or more were determined as acceptable levels for practical realization.

### (4) Evaluation of melt flow rate (MFR)

A cellulose resin composition obtained was dried at 105°C for 7 hours and then measured for a melt flow rate (MFR) by use of a measurement apparatus (product name: Shimadzu flow tester CFT-500D, manufactured by Shimadzu Corporation) in accordance with JIS K7210 at 200°C, and 500 kgf/cm² (49 MPa). The MFR measurement value of 1000 g/10 min or more was determined as an acceptable level for practical realization.

### (5) Evaluation of coefficient of water absorption

Coefficient of water absorption was measured with respect to molded articles (test pieces) in accordance with JIS K7209. The measured coefficient value of water absorption of 3.0% or less was determined as an acceptable level for practical realization.

### [Examples 1 to 5 and Comparative Examples 1 and 2]

The cellulose resin compositions of Examples 1 to 5 and Comparative Examples 1 and 2 were prepared and molded as follows. The obtained compositions or molded articles were evaluated for various properties. The component ratio and evaluation results of the compositions are shown in Table 2.

### (1) Kneading

The cellulose acetate propionate (cellulose resin 1) was used as the cellulose resin, and the polybutylene succinate (product name: BIONOLLE 1001MD, manufactured by Showa Denko K.K.) was used as the linear aliphatic polyester. These were blended in accordance with the blending ratio (% by mass) shown in the following Table 2, melt-kneaded by a twin-screw kneader (product name: HAKKE-MiniLab Micro-Extruder manufactured by Thermo Electron Corp.) at 180 to 210°C and a rotation number of 60 rpm for 7 minutes, to obtain cellulose resin compositions.

### (2) Injection molding

Each of the obtained cellulose resin compositions was subjected to injection molding by use of an injection molding apparatus (product name: HAKKE-MiniJet II, manufactured by Thermo Scientific) at an injection temperature of 180 to 210°C, an injection pressure of 800 bars to 1200 bars and a mold temperature of 100°C while maintaining the pressure at 400 bars to obtain test pieces having a thickness of 2 mm, a width of 13 mm and a length of 80 mm.

Note that the compositions of Comparative Examples 1 and 2 were prepared and molded in the same manner as in Examples except that the linear aliphatic polyester was not added in Comparative Example 1; and except that the cellulose resin was not added in Comparative Example 2.

The obtained test pieces were subjected to evaluation of properties as mentioned above. These results are shown in the following Table 2.

[Table 2]

**Table 2**

| | Comparative Example 1 | Example 1 | Example 2 | Example 3 | Example 4 | Example 5 | Comparative Example 2 |
|---|---|---|---|---|---|---|---|
| Cellulose resin 1 | 100% | 90% | 80% | 70% | 50% | 30% | - |
| PBS (BIONOLLE 1001MD) | - | 10% | 20% | 30% | 50% | 70% | 100% |
| Kneading temperature | 210°C | 200°C | 200°C | 200°C | 200°C | 200°C | 180°C |
| Compatibility | - | ○ | ○ | ○ | ○-Δ | Δ | - |
| Izod impact strength (kJ/m²) | 6.0 | 9.5 | 9.2 | Not broken | 10.1 | Not broken | 2.4 |
| Bending strength (MPa) | 90.8 | 89.0 | 75.0 | 28.6 | 31.8 | 38.6 | 66.3 |
| Bending elastic modulus (GPa) | 2.1 | 2.6 | 2.1 | 0.8 | 0.7 | 0.9 | 1.0 |
| Bending strain (%) | >10 | >10 | >10 | >10 | >10 | >10 | 9.3 |
| MFR (g/10 min) | 990 | 1072 | 1152 | 1153 | 1238 | 1160 | |
| Coefficient of water absorption (%) | 3.01% | 1.97% | | | 1.06% | 0.99% | 0.43% |

As shown in Table 2, the cellulose resin compositions of Examples 1 to 5 satisfied acceptable levels for practical realization with respect to all items. It was also found that the cellulose resin compositions of Examples 1 to 5 are excellent in impact strength and water resistance, compared to the composition of Comparative Example 1 containing a cellulose resin alone (linear aliphatic polyester is not added).

The composition of Comparative Example 1 containing a cellulose resin alone (linear aliphatic polyester is not added) has an MFR of lower than 1000 g/100 min. In this case, since, for example, flowability is not sufficient, molded articles having a thin wall cannot be formed. In addition, since the coefficient of water absorption is larger than 3.0%, for example, dimension stability is not sufficient. As a result, the dimension of a molded article may change at the time of use and members may not be engaged. Because of these problems, it is conceivable that the possibility of the cellulose resin composition in practical use is low.

It is found that the cellulose resin compositions of Examples 1 to 5 have high impact strength, compared to the composition of Comparative Example 2 containing a linear aliphatic polyester alone (cellulose resin 1 is not added).

### [Examples 6 to 10]

A cellulose acetate propionate (cellulose resin 1) as mentioned above was used as the cellulose resin and a polycaprolactone (PCL) as mentioned above was used as the linear aliphatic polyester. Compositions were prepared and molded in the same manner as in the Examples except that these were used in accordance with composition ratios shown in the following Table 4. The obtained compositions or molded articles were evaluated for various properties. These results are shown in the following Table 3.

[Table 3]

**Table 3**

| | Example 6 | Example 7 | Example 8 | Example 9 | Example 10 |
|---|---|---|---|---|---|
| Cellulose resin 1 | 90% | 80% | 70% | 50% | 30% |
| PCL (CELGREEN PH7) | 10% | 20% | 30% | 50% | 70% |
| Kneading temperature | 200°C | 200°C | 200°C | 200°C | 200°C |
| Compatibility | ○ | ○ | ○ | ○-Δ | Δ |
| Izod impact strength (kJ/m²) | 6.9 | 15.9 | 49.6 | 22.9 | 29.3 |
| Bending strength (MPa) | 80.6 | 50.8 | 17.0 | 24.4 | 30.1 |
| Bending elastic modulus (GPa) | 2.4 | 1.7 | 0.6 | 1.0 | 1.0 |
| Bending strain (%) | >10 | >10 | >10 | >10 | >10 |
| MFR (g/10 min) | 1011 | 1173 | 1301 | 1413 | 1323 |
| Coefficient of water absorption (%) | 1.83% | 1.47% | 1.49% | 1.12% | 0.81% |

As shown in Table 3, the cellulose resin compositions of Examples 6 to 10 satisfied acceptable levels for practical realization with respect to all items. It was also found that the cellulose resin compositions of Examples 6 to 10 are excellent in impact strength, water resistance and moldability compared to the composition of Comparative Example 1 containing cellulose resin 1 alone shown in Table 2.

### [Comparative Example 3 and Example 11]

A cellulose acetate butyrate (cellulose resin 2) as mentioned above was used as the cellulose resin and polybutylene succinate (product name: BIONOLLE 1001MD, manufactured by Showa Denko K.K.) was used as the linear aliphatic polyester. Compositions were prepared and molded in the same manner as in Example 1 except that these were used in accordance with composition ratios shown in the following Table 5. The obtained compositions or molded articles were evaluated for various properties. These results are shown in the following Table 4.

[Table 4]

**Table 4**

| | Comparative Example 3 | Example 11 |
|---|---|---|
| Cellulose resin 2 | 100% | 80% |
| PBS (BIONOLLE 1001MD) | - | 20% |
| Kneading temperature | 200°C | 200°C |
| Compatibility | - | ○ |
| Izod impact strength (kJ/m²) | 5.2 | 14.2 |
| Bending strength (MPa) | 93.2 | 59.5 |
| Bending elastic modulus (GPa) | 2.5 | 1.8 |
| Bending strain (%) | >10 | >10 |
| MFR (g/10 min) | 1173 | 1276 |
| Coefficient of water absorption (%) | 2.21% | 1.30% |

As shown in Table 4, the cellulose resin composition of Example 11 satisfied acceptable levels for practical realization with respect to all items. It was also found that the cellulose resin composition of Example 11 is excellent in impact strength, water resistance and moldability, compared to the composition of Comparative Example 3 containing cellulose resin 2 alone.

### [Comparative Examples 4 to 6 and Examples 12 to 22]

A cardanol-grafted cellulose acetate propionate (cellulose resin 3) as mentioned above was used as the cellulose resin and polybutylene succinate (product name: BIONOLLE 1001MD, manufactured by Showa Denko K.K.) was used as the linear aliphatic polyester. In addition, a glass fiber and a cellulose fiber as mentioned above were used as a reinforcement fiber. These were kneaded with the cellulose resin. Compositions were prepared and molded in the same manner as in Example 1 except that these were used in accordance with composition ratios shown in the following Tables 5 to 8. The obtained compositions or molded articles were evaluated for various properties. These results are shown in the following Tables 5 to 8.

[Table 5]

**Table 5**

| | Comparative Example 4 | Example 12 | Example 13 | Example 14 | Example 15 |
|---|---|---|---|---|---|
| Cellulose resin 3 | 100% | 85% | 82.5% | 80% | 75% |
| PBS (BIONOLLE 1001MD) | - | 15% | 17.5% | 20% | 25% |
| Kneading temperature | 200°C | 200°C | 200°C | 200°C | 200°C |
| Compatibility | - | ○ | ○ | ○ | ○ |
| Izod impact strength (kJ/m²) | 2.1 | 6 | 6.2 | 11.3 | 27 |
| Bending strength (MPa) | 86.45 | 60.2 | 53.6 | 41.5 | 34.1 |
| Bending elastic modulus (GPa) | 2.1 | 1.5 | 1.6 | 1.1 | 1.0 |
| Bending strain (%) | 5.8 | >10 | >10 | >10 | >10 |
| MFR (g/10 min) | 1080 | 1248 | | | 1256 |
| Coefficient of water absorption (%) | 1.52% | 1.12% | | 1.06% | 1.12% |

[Table 6]

**Table 6**

| | Example 16 | Example 17 | Comparative Example 5 |
|---|---|---|---|
| Cellulose resin 3 | 70% | 60% | - |
| PBS (BIONOLLE 1001MD) | 30% | 40% | 100% |
| Kneading temperature | 200°C | 200°C | 200°C |
| Compatibility | ○ | ○ | - |
| Izod impact strength (kJ/m²) | 35.6 | 56.7 | 2.4 |
| Bending strength (MPa) | 18.1 | 31.3 | 66.3 |
| Bending elastic modulus (GPa) | 0.5 | 0.9 | 1.0 |
| Bending strain (%) | >10 | >10 | 9.3 |
| MFR (g/10 min) | | 1230 | 1378 |
| Coefficient of water absorption (%) | 1.11% | 0.90% | 0.43% |

[Table 7]

**Table 7**

| | Comparative Example 6 | Example 18 | Example 19 | Example 20 | Example 21 | Example 22 |
|---|---|---|---|---|---|---|
| Cellulose resin 3 | 100% | 70% | 56% | 56% | 50% | 35% |
| PBS (BIONOLLE 1001MD) | - | 30% | 24% | 24% | 50% | 35% |
| Glass fiber (03JAFT792) | - | - | 20% | - | - | 30% |
| Cellulose fiber (W-50GK) | - | - | - | 20% | - | - |
| Kneading temperature | 200°C | 200°C | 200°C | 200°C | 200°C | 200°C |
| Compatibility | - | ○ | Δ | Δ | ○-Δ | Δ |
| Izod impact strength (kJ/m²) | 2.1 | 35.6 | 9.5 | 6.2 | 91.8 | 8.4 |
| Bending strength (MPa) | 86.5 | 18.1 | 49.8 | 33.4 | 43.1 | 99.7 |
| Bending elastic modulus (GPa) | 2.1 | 0.5 | 2.0 | 1.5 | 1.2 | 4.4 |
| Bending strain (%) | 5.8 | >10 | >10 | >10 | >10 | 7.4 |
| MFR (g/10 min) | 1080 | 1253 | 1253 | 1480 | 1325 | 1102 |
| Coefficient of water absorption (%) | 1.52% | 1.11% | 0.88% | 1.36% | 0.69% | 0.52% |

[Table 8]

**Table 8**

| | Example 23 | Example 24 |
|---|---|---|
| Cellulose resin 3 | 50% | 30% |
| PBS (BIONOLLE 1001MD) | 50% | 70% |
| Kneading temperature | 200°C | 200°C |
| Compatibility | ○-Δ | Δ |
| Izod impact strength (kJ/m²) | 91.8 | 72.9 |
| Bending strength (MPa) | 43.1 | 48.2 |
| Bending elastic modulus (GPa) | 1.2 | 0.8 |
| Bending strain (%) | >10 | >10 |
| MFR (g/10 min) | 1325 | 1274 |
| Coefficient of water absorption (%) | 0.69% | 0.62% |

As shown in Table 5 and Table 6, the cellulose resin compositions of Examples 12 to 17 satisfied acceptable levels for practical realization with respect to all items. It was also found that the cellulose resin compositions of Examples 12 to 17 are excellent in impact strength, water resistance and moldability, compared to the composition of Comparative Example 4 containing cellulose resin 3 alone (linear aliphatic polyester is not added). It is further found that, in the cellulose resin compositions of Examples 12 to 17, containing the linear aliphatic polyester (polybutylene succinate) within the range of more than 0% and less than 50%, transparency is maintained.

As shown in Table 7, the cellulose resin compositions of Examples 18 to 22 satisfied acceptable levels for practical realization with respect to all items. It was found that the cellulose resin compositions of Examples 19 and 20 prepared by adding reinforcement fiber are further improved in bending strength and bending elastic modulus, compared to the cellulose resin composition of Example 18 and have satisfactory impact strength compared to the composition of Comparative Example 6 containing cellulose resin 3 alone. It was also found that the cellulose resin composition of Example 22, since it contains cellulose resin 3, polybutylene succinate and a reinforcement fiber, is excellent in impact strength, bending strength, bending elastic modulus, bending strain, moldability and water resistance, compared to the composition of Comparative Example 6 containing cellulose resin 3 alone.

As shown in Table 8, the cellulose resin compositions of Examples 23 and 24 satisfied acceptable levels for practical realization with respect to all items. It was also found that if the linear aliphatic polyester is added in a content of 50% or more, impact strength, moldability and water resistance can be further improved.

### [Examples 25 to 27 and Comparative Examples 7 and 8]

Cellulose resin 3 as mentioned above was used as the cellulose resin; polybutylene succinate adipate, polybutylene succinate and polycaprolactone were used as the linear aliphatic polyester; and polylactic acid (PLA) and poly-3-hydroxybutyrate (PHB) were used as the branched aliphatic polyester. Compositions were prepared and molded in the same manner as in Example 1 except that these were used in accordance with the composition ratios shown in the following Table 9. The obtained compositions or molded articles were evaluated for various properties. These results are shown in the following Table 9.

[Table 9]

**Table 9**

| | Example 25 | Example 26 | Example 27 | Comparative Example 7 | Comparative Example 8 |
|---|---|---|---|---|---|
| Cellulose resin 3 | 80% | 80% | 70% | 70% | 70% |
| PBSA (BIONOLLE 3001MD) | 20% | - | - | - | - |
| PBS (BIONOLLE 1020MD) | - | 20% | - | - | - |
| PCL (CELGREEN PH7) | - | - | 30% | - | - |
| PLA (TERRAMAC TE-4000N) | - | - | - | 30% | - |
| PHB (Biogreen) | - | - | - | - | 30% |
| Kneading temperature | 200°C | 200°C | 200°C | 200°C | 200°C |
| Compatibility | ○ | ○ | ○ | Δ | ○ |
| Izod impact strength (kJ/m²) | 23.2 | 6.2 | 13.1 | 2.1 | 1.9 |
| Bending strength (MPa) | 46.4 | 46.7 | 18.6 | 93.0 | 73.2 |
| Bending elastic modulus (GPa) | 1.3 | 1.4 | 0.5 | 2.5 | 1.9 |
| Bending strain (%) | >10 | >10 | >10 | 4.3 | 4.3 |
| MFR (g/10 min) | 1310 | 1328 | | | |
| Coefficient of water absorption (%) | 0.96% | 0.92% | | | |

As shown in Table 9, the cellulose resin compositions of Examples 25 to 27 satisfied acceptable levels for practical realization with respect to all items. It was also found that the cellulose resin compositions of Examples 25 to 27 are excellent in impact strength, moldability and water resistance, compared to the composition of Comparative Example 6 containing cellulose resin 3 alone shown in Table 7. In contrast, the compositions of Comparative Examples 7 and 8 containing a branched aliphatic polyester, not a linear aliphatic polyester were not improved in impact strength, compared to the composition of Comparative Example 6 containing cellulose resin 3 alone shown in Table 7.

### [Examples 28 to 32 and Comparative Example 9]

Cellulose acetate propionate (cellulose resin 1) as mentioned above was used as the cellulose resin and polybutylene succinate adipate as mentioned above was used as the linear aliphatic polyester. Compositions were prepared and molded in the same manner as in the Examples mentioned above except that these were used in accordance with composition ratios shown in the following Table 10. The obtained compositions or molded articles were evaluated for various properties. These results are shown in the following Table 10.

[Table 10]

**Table 10**

| | Comparative Example 9 | Example 28 | Example 29 | Example 30 | Example 31 | Example 32 | Comparative Example 10 |
|---|---|---|---|---|---|---|---|
| Cellulose resin 1 | 100% | 95% | 90% | 80% | 70% | 30% | - |
| PBSA (BIONOLLE 3001MD) | - | 5% | 10% | 20% | 30% | 70% | 100% |
| Kneading temperature | 210°C | 200°C | 200°C | 200°C | 200°C | 200°C | 180°C |
| Compatibility | - | ○ | ○ | ○ | ○ | Δ | - |
| Izod impact strength (kJ/m²) | 6.0 | 8.4 | 6.7 | 12.8 | 35.8 | 44.6 | 2.4 |
| Bending strength (MPa) | 90.8 | 97.4 | 97.7 | 71.0 | 37.3 | 23.4 | 66.3 |
| Bending elastic modulus (GPa) | 2.1 | 2.9 | 2.9 | 2.4 | 1.3 | 0.4 | 1 |
| Bending strain (%) | >10 | >10 | >10 | >10 | >10 | >10 | 9.3 |
| MFR (g/10 min) | 990 | 1102 | 1081 | 1174 | 1246 | 1081 | - |
| Coefficient of water absorption (%) | 3.01% | 2.62% | 2.18% | 1.82% | 1.73% | - | 0.43% |

As shown in Table 10, the cellulose resin compositions of Examples 28 to 32 satisfied acceptable levels for practical realization with respect to all items. It was also found that the cellulose resin compositions of Examples 28 to 32 are excellent in impact strength and water resistance, compared to the composition of Comparative Example 9 containing a cellulose resin alone (linear aliphatic polyester is not added).

The composition of Comparative Example 9 containing a cellulose resin alone (linear aliphatic polyester is not added) has an MFR lower than 1000 g/100 min. In this case, since, for example, flowability is not sufficient, molded articles having a thin wall cannot be formed. In addition, since the coefficient of water absorption is larger than 3.0%, for example, dimension stability is not sufficient. As a result, the dimension of a molded article may change at the time of use and members may not be engaged. Because of these problems, it is conceivable that the possibility of the cellulose resin composition in practical use is low.

It is found that the cellulose resin compositions of Examples 28 to 32 have high impact strength, compared to the composition of Comparative Example 10 containing a linear aliphatic polyester alone (cellulose resin 1 is not added).

### [Examples 33 to 39 and Comparative Example 11]

Cardanol-grafted cellulose acetate (cellulose resin 4) as mentioned above was used as the cellulose resin and polybutylene succinate or polybutylene succinate adipate as mentioned above was used as the linear aliphatic polyester. Compositions were prepared and molded in the same manner as in Example 1 except that these were used in accordance with composition ratios shown in the following Tables 11 and 12. The obtained compositions or molded articles were evaluated for various properties. These results are shown in the following Tables 11 and 12.

[Table 11]

**Table 11**

| | Comparative Example 11 | Example 33 | Example 34 | Example 35 | Example 36 | Example 37 | Example 38 | Example 39 |
|---|---|---|---|---|---|---|---|---|
| Cellulose resin 4 | 100% | 30.0% | 90.0% | 81.0% | 76.5% | 80.0% | 72.0% | 68.0% |
| PBS (BIONOLLE 1020MD) | - | 70.0% | - | - | - | - | - | - |
| PBSA (BIONOLLE 3001MD) | - | - | 10.0% | 9.0% | 8.5% | 20.0% | 18.0% | 17.0% |
| Glass fiber (03JAFT792) | - | - | - | 10.0% | 15.0% | - | 10.0% | 15.0% |
| Kneading temperature | - | 200°C | 200°C | 200°C | 200°C | 200°C | 200°C | 200°C |
| Compatibility | - | Δ | ○ | - | - | ○ | - | - |
| Izod impact strength (kJ/m²) | 4.6 | 6.0 | 9.0 | 7.4 | 8.1 | 6.6 | 8.0 | 9.1 |
| Bending strength (MPa) | 66.5 | - | 52.4 | 64.1 | 73.9 | 52.3 | 71.3 | 79.1 |
| Bending elastic modulus (GPa) | 2.1 | - | 1.5 | 2.3 | 2.7 | 1.5 | 2.0 | 2.7 |
| Bending strain (%) | 7.8 | - | >10 | >10 | 9.2 | >10 | 9.7 | 8.7 |
| MFR (g/10 min) | 1046 | - | 1084 | 1066 | - | 1141 | - | - |
| Coefficient of water absorption (%) | 0.83% | - | 0.84% | 0.81% | - | 0.81% | - | - |

**[Table 12] Table 12**

| | Comparative Example 11 | Example 40 | Example 41 | Example 42 | Example 43 | Example 44 | Example 45 | Example 46 | Example 47 |
|---|---|---|---|---|---|---|---|---|---|
| Cellulose resin 4 | 100% | 70.0% | 63.0% | 59.5% | 56.0% | 52.5% | 50.0% | 37.5% | 30.0% |
| PBS (BIONOLLE 1020MD) | - | - | - | - | - | - | - | - | - |
| PBSA (BIONOLLE 3001MD) | - | 30.0% | 27.0% | 25.5% | 24.0% | 22.5% | 50.0% | 37.5% | 70.0% |
| Glass fiber (03JAFT792) | - | - | 10.0% | 15.0% | 20.0% | 25.0% | - | 25.0% | - |
| Kneading temperature | - | 200°C | 200°C | 200°C | 200°C | 200°C | 200°C | 200°C | 200°C |
| Compatibility | - | ○ | - | - | - | - | ○-Δ | - | Δ |
| Izod impact strength (kJ/m²) | 4.6 | 10.8 | 9.7 | 10.6 | 11.2 | 8.6 | 7.7 | 10.6 | 6.6 |
| Bending strength (MPa) | 66.5 | 50.6 | 66.6 | 77.0 | 84.5 | 82.6 | 42.8 | 75.2 | - |
| Bending elastic modulus (GPa) | 2.1 | 1.2 | 1.9 | 2.5 | 3.1 | 3.8 | 1.0 | 2.8 | - |
| Bending strain (%) | 7.8 | >10 | >10 | 7.4 | 7.9 | 6.0 | >10 | 6.0 | - |
| MFR (g/10 min) | 1046 | 1202 | 1124 | - | 1030 | 1069 | 1195 | 1086 | |
| Coefficient of water absorption (%) | 0.83% | 0.79% | 0.69% | - | 0.63% | 0.57% | - | - | |

As shown in Table 11 and Table 12, the cellulose resin compositions of Examples 33 to 47 satisfied acceptable levels for practical realization with respect to all items. It was also found that the cellulose resin compositions of Examples 34, 35, 37, 40, 41 and 44 to 46 are excellent in impact strength and flowability, compared to the composition of Comparative Example 11 containing a cellulose resin alone (linear aliphatic polyester is not added). It was further found that the cellulose resin compositions of Examples 35, 36, 38, 39, 41 to 44 and 46 are improved in rigidity by addition of a glass fiber and improved in bending strength while maintaining excellent impact strength.

### [Examples 48 to 55 and Comparative Example 12]

Cardanol-grafted cellulose acetate (cellulose resin 4) as mentioned above was used as the cellulose resin and polybutylene succinate adipate as mentioned above was used as the linear aliphatic polyester. Compositions were prepared and molded in the same manner as in Example 1 except that these were used in accordance with composition ratios shown in the following Table 13. The obtained compositions or molded articles were evaluated for various properties. These results are shown in the following Table 13. Note that "PTFE" in the table represents polytetrafluoroethylene and "2.4 mm flammability" represents rating according to the flammability test of a specimen having 2.4 mm in thickness based on UL94 standard.

[Table 13]

**Table 13**

| | Comparative Example 12 | Example 48 | Example 49 | Example 50 | Example 51 | Example 52 | Example 53 | Example 54 | Example 55 |
|---|---|---|---|---|---|---|---|---|---|
| Cellulose resin 4 | 58.7% | 52.6% | 43.6% | 39.1% | 46.7% | 38.7% | 34.7% | 30.4% | 21.7% |
| PBSA (BIONOLLE 3001MD) | - | 5.8% | 4.8% | 4.3% | 11.7% | 9.7% | 8.7% | 13.0% | 21.7% |
| Glass fiber (03JAFT792) | - | - | 10.0% | 15.0% | - | 10.0% | 15.0% | 15.0% | 15.0% |
| Aluminum hydroxide (BE033) | 29.3% | 29.3% | 29.3% | 29.3% | 29.3% | 29.3% | 29.3% | 29.3% | 29.3% |
| CDP (Phosphoric acid ester) | 11.7% | 11.7% | 11.7% | 11.7% | 11.7% | 11.7% | 11.7% | 11.7% | 11.7% |
| PTFE | 0.3% | 0.5% | 0.5% | 0.5% | 0.5% | 0.5% | 0.5% | 0.5% | 0.5% |
| Kneading temperature | 200°C | 200°C | 200°C | 200°C | 200°C | 200°C | 200°C | 200°C | 200°C |
| 2.4 mm flame retardation | -V-1 | V-1 | V-0 | V-0 | V-1 | V-0 | V-0 | V-0 | V-0 |
| Izod impact strength (kJ/m²) | 2.0 | 7.5 | 6.3 | 6.2 | 6.0 | 6.9 | 7.2 | 8.2 | 14.2 |
| Bending strength (MPa) | 33.2 | 23.7 | 34.7 | 38.9 | 29.3 | 39.1 | 44.0 | 43.5 | 41.8 |
| Bending elastic modulus (GPa) | 1.4 | 1.1 | 6.1 | 4.9 | 1.1 | 5.5 | 4.6 | 4.6 | 4.4 |
| Bending strain (%) | >10 | >10 | 10.0 | 6.6 | >10 | 8.8 | 6.1 | 6.7 | 6.7 |
| MFR (g/10 min) | 1046 | 1138 | 1089 | 1130 | 1195 | 1165 | 1080 | 1121 | 1069 |
| Coefficient of water absorption (%) | - | 0.57% | 0.54% | 0.43% | 0.55% | 0.39% | 0.42% | 0.47% | 0.46% |

As shown in Table 13, the cellulose resin compositions of Examples 48 to 55 satisfied acceptable levels for practical realization with respect to all items and had high flame retardance. It was also found that the cellulose resin compositions of Examples 48 to 55 are excellent in impact strength, compared to the composition of Comparative Example 12 containing cellulose resin alone (linear aliphatic polyester is not added). It was further found that the cellulose resin compositions of Examples 49, 50 and 52 to 55 are improved in rigidity by addition of a glass fiber and improved in bending strength while maintaining excellent impact strength.

### [Examples 56 to 59 and Comparative Example 13]

A long/short chain bound cellulose derivative (cellulose resin 5) as mentioned above was used as the cellulose resin and polybutylene succinate adipate as mentioned above was used as the linear aliphatic polyester. Compositions were prepared and molded in the same manner as in Example 1 except that these were used in accordance with composition ratios shown in the following Table 14. The obtained compositions or molded articles were evaluated for various properties. These results are shown in the following Table 14.

[Table 14]

**Table 14**

| | Comparative Example 13 | Example 56 | Example 57 | Example 58 | Example 59 |
|---|---|---|---|---|---|
| Cellulose resin 5 | 100% | 70% | 52.5% | 50.0% | 37.5% |
| PBSA (BIONOLLE 3001MD) | - | 30% | 22.5% | 50.0% | 37.5% |
| Glass fiber (03JAFT792) | - | - | 25.0% | - | 25.0% |
| Kneading temperature | - | 210°C | 210°C | 210°C | 210°C |
| Izod impact strength (kJ/m²) | 2.0 | 6.0 | 6.5 | 6.8 | 11.8 |
| Bending strength (MPa) | 63.5 | 44.5 | 77.9 | 37.5 | 75.9 |
| Bending elastic modulus (GPa) | 1.8 | 1.2 | 3.4 | 0.8 | 2.3 |
| Bending strain (%) | 8.6 | >10 | 6.9 | >10 | >10 |
| MFR (g/10 min) | 684 | 1252 | 1044 | 1282 | 1216 |
| Coefficient of water absorption (%) | 0.74% | 0.85% | 0.53% | 0.78% | 0.57% |

As shown in Table 14, the cellulose resin compositions of Examples 56 to 59 satisfied acceptable levels for practical realization with respect to all items. It was also found that the cellulose resin compositions of Examples 56 to 59 are excellent in impact strength, compared to the composition of Comparative Example 13 containing a cellulose resin alone (linear aliphatic polyester is not added). It was further found that the cellulose resin compositions of Examples 57 and 59 are improved in rigidity by addition of a glass fiber and improved in bending strength while maintaining excellent impact strength.

### [Examples 60 to 77]

Cardanol-grafted cellulose acetate (cellulose resin 4) as mentioned above was used as the cellulose resin and crosslinked polybutylene succinate adipates (PBSA-1 to 4) as mentioned above were used the crosslinked linear aliphatic polyester. Compositions were prepared and molded in the same manner as in Example 1 except that these were used in accordance with composition ratios shown in the following Tables 15 to 17. The obtained compositions or molded articles were evaluated for various properties. These results are shown in the following Tables 15 to 17.

[Table 15]

**Table 15**

| | Example 60 | Example 61 | Example 62 | Example 63 | Example 64 | Example 65 | Example 66 | Example 67 |
|---|---|---|---|---|---|---|---|---|
| Cellulose resin 4 | 76.5% | 68.0% | 70.0% | 59.5% | 50.0% | 42.5% | 30.0% | 25.5% |
| PBSA-3 (LA-1 (1%)) | 8.5% | 17.0% | 30.0% | 25.5% | 50.0% | 42.5% | 70.0% | 59.5% |
| Glass fiber (03JAFT792) | 15.0% | 15.0% | - | 15.0% | - | 15.0% | - | 15.0% |
| Kneading temperature | 200°C | 200°C | 200°C | 200°C | 200°C | 200°C | 200°C | 200°C |
| Izod impact strength (kJ/m²) | 8.5 | 8.6 | 10.3 | 8.8 | 11.8 | 13.7 | 80.6 | 23.2 |
| Bending strength (MPa) | 70.0 | 71.6 | 48.3 | 69.8 | 43.8 | 65.3 | 35.5 | 60.7 |
| Bending elastic modulus (GPa) | 2.9 | 2.7 | 1.2 | 2.5 | 1.0 | 2.2 | 0.6 | 1.3 |
| Bending strain (%) | >10 | 9.4 | >10 | 9.5 | >10 | 9.7 | >10 | >10 |
| MFR (g/10 min) | 1073 | 1120 | 1119 | 1094 | 1217 | 1201 | 1210 | 1224 |
| Coefficient of water absorption (%) | 0.79% | 0.70% | 0.63% | 0.52% | 0.56% | 0.54% | 0.69% | 0.57% |

[Table 16]

**Table 16**

| | Example 68 | Example 69 | Example 70 | Example 71 | Example 72 |
|---|---|---|---|---|---|
| Cellulose resin 4 | 76.5% | 76.5% | 76.5% | 76.5% | 76.5% |
| PBSA (BIONOLLE 3001MD) | 8.5% | - | - | - | - |
| PBSA-1 (LA-1 (5%)) | - | 8.5% | - | - | - |
| PBSA-3 (LA-1 (1%)) | - | - | 8.5% | - | - |
| PBSA-2 (Stabaxol P (5%)) | - | - | - | 8.5% | - |
| PBSA-4 (Stabaxol P (1%)) | - | - | - | - | 8.5% |
| Glass fiber (03JAFT792) | 15% | 15% | 15% | 15% | 15% |
| Izod impact strength (kJ/m²) | 8.1 | 7.6 | 8.5 | 7.4 | 8.5 |
| Bending strength (MPa) | 73.9 | 78.1 | 70.0 | 75.1 | 68.6 |
| Bending elastic modulus (GPa) | 2.7 | 2.5 | 2.9 | 2.0 | 2.7 |
| Bending strain (%) | 9.2 | 8.6 | 9.7 | 8.3 | 9.8 |
| MFR (g/10 min) | 1022 | 1005 | 1073 | 1030 | 1118 |
| Coefficient of water absorption (%) | 0.80% | 0.69% | 0.79% | 0.72% | 0.72% |

[Table 17]

**Table 17**

| | Example 73 | Example 74 | Example 75 | Example 76 | Example 77 |
|---|---|---|---|---|---|
| Cellulose resin 4 | 68% | 68% | 68% | 68% | 68% |
| PBSA(BIONOLLE 3001MD) | 17% | - | - | - | - |
| PBSA-1 (LA-1 (5%)) | - | 17% | - | - | - |
| PBSA-3 (LA-1 (1%)) | - | - | 17% | - | - |
| PBSA-2 (Stabaxol P (5%)) | - | - | - | 17% | - |
| PBSA-4 (Stabaxol P (1%)) | - | - | - | - | 17% |
| Glass fiber (03JAFT792) | 15% | 15% | 15% | 15% | 15% |
| Izod impact strength (kJ/m²) | 9.1 | 7.8 | 8.6 | 7.5 | 9.1 |
| Bending strength (MPa) | 79.1 | 75.9 | 71.6 | 77.8 | 72.5 |
| Bending elastic modulus (GPa) | 2.8 | 1.8 | 2.7 | 1.9 | 2.8 |
| Bending strain (%) | 8.7 | 9.0 | 9.4 | 9.3 | 8.8 |
| MFR (g/10 min) | 1046 | 1004 | 1120 | 1050 | 1136 |
| Coefficient of water absorption (%) | 0.72% | 0.69% | 0.70% | 0.66% | 0.68% |

As shown in Tables 15 to 17, the cellulose resin compositions of Examples 60 to 77 satisfied acceptable levels for practical realization with respect to all items. It was also found that the cellulose resin compositions of Examples 63, 65 and 67 are improved in rigidity by addition of a glass fiber and improved in bending strength while maintaining excellent impact strength.

In the foregoing, the present invention has been described with reference to the exemplary embodiments and the Examples; however, the present invention is not limited to the exemplary embodiments and the Examples. Various modifications understandable to those skilled in the art may be made to the constitution and details of the present invention within the scope thereof.

### Industrial Applicability

The cellulose resin composition according to the exemplary embodiment is, for example, improved in impact resistance even through it is a bioplastic and can be used in outer packages such as cases for electric apparatuses, in the same manner as in petroleum plastics.

This application claims priority rights based on Japanese Patent Application No. 2013-16255 filed on January 30, 2013 and Japanese Patent Application No. 2013-217702 filed on October 18, 2013, the disclosures of which are incorporated herein in their entirety by reference.

## Claims

1. A cellulose resin composition comprising a cellulose resin (X) obtained by binding an organic group to cellulose or a derivative thereof and a linear aliphatic polyester (Y), which is at least one of the following linear aliphatic polyesters (Y1) and (Y2) or a crosslinked product thereof:
(Y1) a linear aliphatic polyester comprising at least one of repeat units represented by the following formula (I) and formula (II)
-(CO-R¹-COO-R²-O)- formula (I)
where R¹ represents a bivalent aliphatic group having 1 to 12 carbon atoms and R² represents a bivalent aliphatic group having 2 to 12 carbon atoms;
-(CO-R³-O)- formula (II)
where R³ represents a bivalent aliphatic group having 2 to 10 carbon atoms; and
(Y2) a linear aliphatic polyester comprising a ring-opening polymerization product of a cyclic ester.

2. The cellulose resin composition according to Claim 1, wherein the cellulose resin (X) is a cellulose resin obtained by binding an organic group to cellulose or a derivative thereof via an oxygen-containing bond.

3. The cellulose resin composition according to Claim 1 or 2, wherein the cellulose resin (X) is a cellulose resin obtained by binding at least one selected from the group consisting of a carboxylic acid, an alcohol and a phenol each having 1 to 32 carbon atoms, and derivatives of thereof, to cellulose or a derivative thereof.

4. The cellulose resin composition according to Claim 3, wherein the carboxylic acid in the cellulose resin (X) is a monocarboxylic acid;
the alcohol in the cellulose resin (X) is at least one selected from aliphatic alcohols and alicyclic alcohols; and
the phenol in the cellulose resin (X) is at least one selected from cardanol and cardanol derivatives.

5. The cellulose resin composition according to Claim 1, wherein the cellulose resin (X) is cellulose or an acylated cellulose to which cardanol or a derivative thereof thereto is bound.

6. The cellulose resin composition according to any one of Claims 1 to 5, wherein the linear aliphatic polyester (Y1) is a condensate between at least one selected from the group consisting of an aliphatic dicarboxylic acid, an acid anhydride thereof and a diester product thereof, and an aliphatic diol.

7. The cellulose resin composition according to any one of Claims 1 to 5, wherein the linear aliphatic polyester or a crosslinked product thereof (Y) is at least one selected from the group consisting of polybutylene succinate, polybutylene succinate adipate and polycaprolactone, or a crosslinked product thereof.

8. The cellulose resin composition according to any one of Claims 1 to 7, wherein the cellulose resin (X) and the linear aliphatic polyester or a crosslinked product thereof (Y) are contained in a content ratio (mass ratio, X:Y) of 95:5 to 30:70.

9. A molding material comprising a cellulose resin composition according to any one of Claims 1 to 8.

10. A molded article obtained by molding a molding material according to Claim 9.
